# EUROPEAN PATENT SPECIFICATION

(11) **EP 1 813 450 B1**
(45) Date of publication and mention of the grant of the patent: **07.04.2010**
(21) Application number: 06001707.6
(22) Date of filing: 27.01.2006
(51) Int. Cl.: B60G 17/015, B60G 21/00

(54) **Vehicle with tilting suspension system**
Seitlich neigbares Fahrzeug
Véhicule comprenant un système de suspension permettant l'inclinaison du véhicule

(43) Date of publication of application: 01.08.2007
(73) Proprietor: Fondazione Torino Wireless, 10129 Torino (IT); POLITECNICO DI TORINO, 10129 Torino (IT)
(72) Inventor: Tonoli, Andrea, Avigliana (Torino) (IT); Festini, Andrea, Collegno (Torino) (IT); Cavalli, Fabio, Alessandria (IT)
(74) Representative: Grünecker, Kinkeldey, Stockmair & Schwanhäusser Anwaltssozietät

(56) References cited:
- WO-A-2005/002957
- FR-A- 2 745 757
- FR-A- 2 872 772
- US-A- 5 765 846

## Description

### FIELD OF THE PRESENT INVENTION

The present invention relates to the field of automotive applications. In particular, the present invention relates to a suspension tilting module for wheeled vehicles and a wheeled vehicle equipped with such a suspension tilting module. In more detail, the present invention relates to a suspension tilting module allowing at least two wheels of a vehicle disposed on a common axle to be tilted together with the whole body of the vehicle. Still in more detail, the present invention relates to a suspension tilting module allowing both tilting and vertical displacement of said two wheels. Furthermore, the present invention relates to a suspension tilting module allowing to adequately absorb shocks to which one or both of said two wheels are subjected, for instance, when one or both of said two wheels crosses a bump. Moreover, the present invention relates to a suspension tilting module, wherein, during vertical displacement of one or both of said two wheels, a force is exerted on one or both of said two wheels, respectively, with said force varying in a non-linear manner as a function of the vertical displacement of one or both of said two wheels.

### DESCRIPTION OF THE PRIOR ART

Over the past few years, an interest has grown towards vehicles with innovative configurations due to the increasing number of vehicles and the related problems of traffic congestion and pollution. Such vehicles are usually of small weight and size to minimize the parking problems and reduce the losses due to the rolling resistance and aerodynamic drag. In particular, the size of these vehicles is normally designed for one or two people, thus allowing personal mobility; moreover, the small size and weight of these vehicles allows for the reduction of the engine power and accordingly, allows to reduce the emissions without compromising the performance.

In particular, over the past years, many efforts have been devoted by the car manufacturers to the development of so-called tilting vehicles, namely of vehicles wherein all or part of the vehicle is inclined inward during cornering so that the resultant of the gravity and the centrifugal forces is kept oriented along the vertical body axis of the vehicle. In other words, tilting vehicles are characterized by the capacity to bank over to the side like a motorcycle. Accordingly, rollover can be avoided even if the track of the tilting vehicle is narrow with respect to that of conventional vehicles.

Several tilting vehicles have been proposed in the past with three or more wheels. In some three wheeled vehicles, the tilting is given just to the body and the central wheel while the axis with two wheels does not tilt. On the contrary, in other cases, the solution is preferred according to which all wheels tilt with the body, since this solution allows to obtain improved performances concerning the dynamic of the vehicle.

Examples of prior art suspension and/or tilting modules are known from each of documents Ff-A-2 872 772, US-A-5 765 846 and WO 2005/002957.

However, in spite of all the advantages offered by tilting vehicles, the further development of these vehicles has revealed that several problems have still to be solved and/or overcome. For instance, it has been revealed to be very difficult to obtain good tilting performances in the case of driving wheels, i.e. in the case of wheels exploiting the traction function; in fact, in the case of driving wheels, the tilting angle obtained with the known tilting solutions is rather limited (in the range of 35°) whilst only tilting angles in the range of 45° allow to overcome the rollover problem. For this reason, up to now, tilting solutions have been proposed essentially for tricycles, wherein the mechanical transmission is connected to a central wheel (as in the case of a motorbike) while the other two wheels are tilting but they do not exploit the driving function. To overcome this limitation, solutions have been proposed according to which a differential gear is installed on a frame that can rotate with respect to the body of the vehicle; this allows to keep the misalignment of the ball joints to acceptable limits even with large tilting angles of the vehicle body. However, the resulting configuration is very complex and may be affected by low efficiency and reliability, high vibration levels and heavy weight.

Further problems affecting the known tilting solutions relate to the fact that these solutions have revealed to be unsatisfactory when applied to steering wheels; in particular, in the known solutions, either the steering angle or the tilting angle is very limited whilst no solutions are known allowing good performance concerning both the steering and the tilting function. In particular, this is due to the fact that standard ball joints of the kind used for cars' suspensions cannot be used when high titling angles have to be obtained. In fact, spherical joints for automotive applications are designed to allow free rotation about the steering axis but the tilting angles allowed by spherical joints are limited to less than 40°. However, these titling angles are not adequate for high tilting suspension systems when rotation angles in the range of 100° are needed.

Furthermore, suspension tilting systems of the kind known in the art are affected by the additional drawback that they usually do not allow to adequately absorb the shocks to which the tilting wheels are subjected during driving, for instance when crossing a bump or the like. In particular, this is due to the fact that the shock absorbers usually implemented in the known tilting modules and/or systems exert a resilient force on the wheels which vary linearly with the vertical displacement of the wheels; in other words, the resilient force exerted by the shock absorbers of common tilting modules is directly proportional to the vertical displacements of the wheels. This means, in particular, that high resilient spring forces are only exerted in the case of large displacements of the wheels. However, this solution has been revealed to be unsatisfactory for several vehicles, in particular, in the case of light weight vehicles, wherein the mass of the passengers and luggage is an important fraction of the overall mass of the vehicle. In fact, the vehicle behaves very differently depending on the number of passengers and the weight of the luggage. In the case of only a few passengers and less luggage, only a limited excursion and/or travel of the suspension system is allowed; in other words, only a limited vertical displacement of a wheel crossing a bump is allowed. On the contrary, in the case of several passengers and heavy luggage, the travel and/or excursion of the suspension increases or, in other words, an increased vertical displacement of a wheel crossing a bump is allowed. However, the comfort offered by the vehicle as well as its dynamic behavior are not satisfactory. Accordingly, many efforts have been devoted in the past to overcome this problem; for instance, solutions have been proposed, wherein the stiffness of the suspension system increases with the load, thus allowing to keep the natural frequency of the suspended mass at a fairly constant value. For instance, solutions have been proposed, wherein additional springs are introduced in an attempt to obtain non-linear characteristics of the suspension system, with a stiffness increasing with the load (progressive characteristic). The additional springs are usually of elastomeric material and start working when the displacements become larger than a given value. However, these solutions are very complex so that they may not be implemented in low cost vehicles.

A further problem affecting the prior art suspension tilting modules and/or systems relates to the fact that, in the case of broad vehicles, i.e. of vehicles with broad track, the two tilting wheels do not tilt the same way, so that the vehicle actually does not behave like a motorbike.

Accordingly, in view of the problems and/or drawbacks identified above, it is an object of the present invention to provide a suspension tilting module allowing to overcome the drawbacks affecting the prior art tilting solutions. Moreover, it is an object of the present invention to provide a suspension tilting module for a wheeled vehicle adapted to be implemented in the case of driving wheels, namely in the case of wheels exploiting the driving and/or traction function, but still allowing high tilting angles, in particular tilting angles of more than 45° on each side of the vehicle. Another object of the present invention is that of providing a suspension tilting module of reduced complexity, dimensions and weight. A further object of the present invention is that of providing a suspension tilting module adapted to be implemented not only in the case of three-wheeled vehicles, but in any kind of vehicle comprising at least two wheels disposed on a common axle. Still a further object of the present invention is that of providing a suspension tilting module allowing driving means to be installed in the hubs of the wheels so as to realize an all-wheel drive configuration. Still a further object of the present invention is that of providing a suspension tilting module allowing both tilting and vertical displacement of the wheels. In particular, a further object of the present invention is that of providing a suspension tilting module allowing to adequately absorb the shocks to which the wheels are subjected, for instance when crossing a bump or the like.

Another object of the present invention is that of providing a suspension tilting module and/or system wherein the stiffness of the suspension system or the stiffness of the shock absorbing means varies in a non-linear manner as a function of the vertical displacement of the two wheels. Finally, a further object of the present invention is that of providing a suspension titling module and/or system wherein the two wheels are tilted the same way, in particular in the case of broad or large vehicles, i.e. vehicles with large or broad body or chassis.

### SUMMARY OF THE PRESENT INVENTION

To this end, according to the present invention, this is obtained by providing a suspension tilting module adapted to support two wheels so that tilting of said suspension system results in said two wheels being also tilted and wherein both tilting and vertical displacement of said two wheels are allowed. Moreover, according to the present invention, this is obtained by providing a suspension tilting module comprising innovative shock absorbing means adapted to adequately absorb the shocks to which the wheels are subjected, for instance, when crossing a bump or the like.

In particular, according to the present invention, there is provided a suspension tilting module as claimed in claim 1, namely a suspension tilting module for a wheeled vehicle comprising at least a first and a second wheel disposed on a common axle, said module comprising a suspension structure adapted to support said at least first and second wheels allowing both tilting and vertical displacement of said at least first and second wheels, said module comprising tilting means pivotally connected to said suspension structure, so that tilting of said tilting means results in said suspension structure being tilted together with said at least first and second wheels, wherein said tilting means are connected to said suspension structure through first and second shock absorbing means, so that a vertical displacement of one or both of said first and second wheels results in a force being exerted on one or both of said first and second wheels, respectively, contrary to said vertical displacement and varying in a non-linear manner as a function of said vertical displacement of said at least first and second wheels and wherein said first and second shock absorbing means comprise first and second resilient shock absorbers, respectively, adapted to be resiliently stimulated as a result of a vertical displacement of said first and second wheels, respectively, as well as first and second rotatable means pivotally connected to said first and second resilient shock absorbers, respectively, and adapted to be rotated as a result of a vertical displacement of said first and second wheels, respectively, the rotation of said first and second rotatable means resulting in an additional resilient stimulation being exerted on said first and second resilient shock absorbers, respectively.

Still according to the present invention, there is also provided a suspension tilting module as claimed in claim 3, namely a module wherein said first and second rotatable means comprise first and second rocker arms, respectively, said first rocker arm being further pivotally connected to said first resilient shock absorber through a pivotable connection as well as to said tilting means through a pivotable connection, said second rocker arm being pivotally connected to said second shock absorber through a pivotable connection, as well as to said tilting means through a pivotable connection.

There is also provided a suspension titling module as claimed in claim 8, namely a module wherein said tilting means further comprise a tilting crank, a first tilting rod pivotally connected to said tilting crank, a second tilting rod pivotally connected to both said first tilting rod and said suspension structure, and a third tilting rod pivotally connected to both said first tilting rod and said suspension structure.

Still according to the present invention, there is provided a suspension tilting module as claimed in claim 18, namely a suspension tilting module, wherein said suspension structure comprises first and second steering arms or uprights adapted to rotatably support said first and second wheels, respectively, wherein said first and second steering arms or uprights are adapted to allow steering of said wheels on corresponding steering axis substantially vertical.

There is also provided a titling suspension system as claimed in claim 19, namely a tilting suspension system for a wheeled vehicle comprising at least a first and a second wheel disposed on a common axle, wherein said system comprises a suspension tilting module according to the present invention and two wheels rotatably connected to said module.

Furthermore, there is also provided a wheeled vehicle as claimed in claim 26, namely a wheeled vehicle equipped with a suspension tilting module or a tilting suspension system according to the present invention.

Further embodiments and/or details of the present invention are defined in the dependent claims.

### BRIEF DESCRIPTION OF THE DRAWINGS

In the following, a description will be given with reference to the drawings of particular and/or preferred embodiments of the present invention; it has, however, to be noted that the present invention is not limited to the embodiments disclosed but that the embodiments disclosed only relate to particular examples of the present invention, the scope of which is defined by the appended claims. In particular, in the drawings:
figure 1 relates to a schematic exploited view of a first embodiment of the suspension tilting module and the tilting driving suspension system according to the present invention;
figure 2a relates to a front view of the embodiment of the present invention depicted in figure 1;
figure 2b relates to a rear view of the embodiment of the present invention depicted in figure 1;
figure 3 relates to an exploited view of a solution adapted to be implemented in the module and system according to the present invention;
figure 4a relates to schematic view of the titling module and system according to the present invention when tilted at a predefined angle;
figure 4b relates to a schematic view depicting the behavior of the tilting module and system according to the present invention when one of the wheels crosses a bump;
figure 5 relates to a schematic exploited view of a further embodiment of the suspension tilting module according to the present invention;
figure 5a relates to a schematic exploited view of a further embodiment of the suspension tilting module according to the present invention;
figure 5b relates to a schematic front view of the embodiment of the present invention depicted in figure 5b;
figure 6a relates to a schematic front view of the embodiment of the present invention depicted in figure 5;
figure 6b relates to a partial schematic front view of the embodiment of the tilting module according to the present invention depicted in figure 5, showing the behavior of this embodiment when one of the wheels is subjected to a vertical displacement;
figure 7a relates to a schematic front view of a further embodiment of the suspension tilting module according to the present invention;
figure 7b relates to a partial schematic front view of the module of figure 7a, showing the behavior of this module when one of the wheels is subjected to a vertical displacement;
figure 8 relates to a schematic exploited view of a further embodiment of the suspension tilting module according to the present invention;
figurer 8a relates to a schematic front view of the embodiment depicted in figure 8 when equipped with progressive shock absorbing means;
figure 8b relates to a schematic front view of the embodiment of figure 8a when tilted at a predefined angle; and
figure 9 relates to a schematic front view of a further embodiment of the suspension tilting module according to the present invention.

### DETAILED DESCRIPTION

While the present invention is described with reference to the embodiments as illustrated in the following detailed description as well as in the drawings, it should be understood that the following detailed description as well as the drawings are not intended to limit the present invention to the particular illustrative embodiments disclosed, but rather the described illustrative embodiments merely exemplify the various aspects of the present invention, the scope of which is defined by the appended claims.

As apparent from the disclosure given above, the present invention is understood to be particularly advantageous when used for applications in the automotive field; in particular, the present invention is understood to be particularly advantageous when applied to wheeled vehicles comprising at least two wheels disposed on a common axle. For this reason, examples will be given in the following in which corresponding embodiments of the titling module or system according to the present invention are described in combination with steering wheels. However, it has to be noted that the present invention is not limited to the particular case of a tilting module and system for steering wheels but can be used in any other situation in which two wheels of a vehicle disposed on a common axle need to be tilted. Accordingly, it will become apparent from the following disclosure that the present invention may also be used for automotive applications in which, for instance, the steering wheels are not tilted.

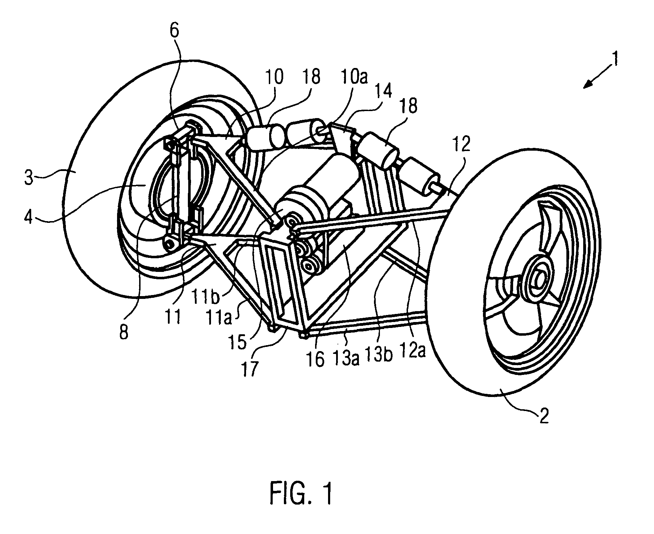

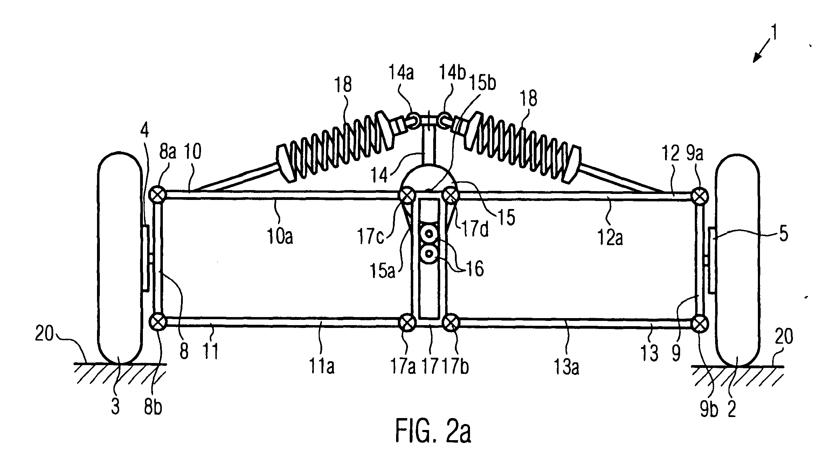

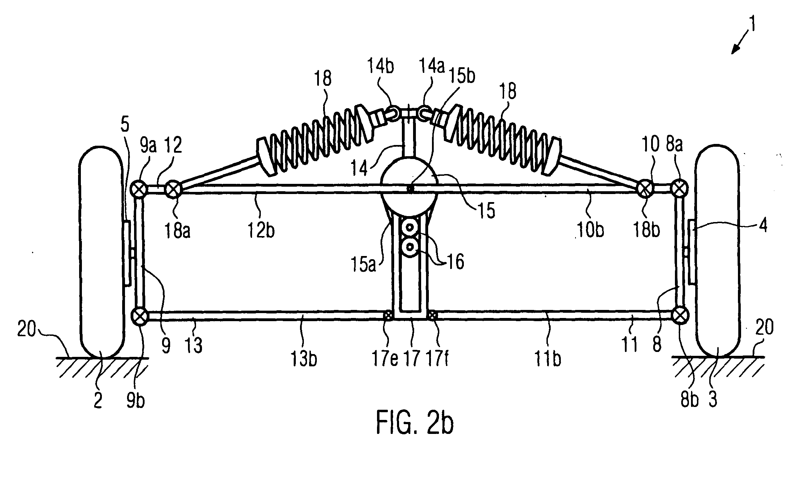

In the following, with reference to figures 1, 2a and 2b, a first embodiment of the tilting module and system (identified by the reference numeral 1) according to the present invention will be described.

As apparent from figures 1, 2a and 2b, the tilting module and system depicted therein comprise a suspension structure or system defined by a rigid frame 17 and four suspension wishbone arms 10, 11, 12 and 13. In particular, said suspension structure comprises a first upper wishbone arm 12 defined by a front wishbone portion 12a and a rear wishbone portion 12b (see in particular figure 2b). In the same way, the suspension structure comprises a first lower wishbone arm 13 defined by a front wishbone portion 13a and a rear wishbone portion 13b. Similarly, the suspension structure comprises a second upper wishbone arm 10 defined by a front wishbone portion 10a and a rear wishbone portion 10b (see figure 2b). Moreover, the suspension structure comprises a second lower wishbone arm 11 defined by a front wishbone portion 11 a and a rear wishbone portion 11 b. The front wishbone portions 12a and 13a of the first upper arm 12 and the first lower arm 13, respectively, are pivotally connected to the rigid frame 17 through pivotable connections 17d and 17b, respectively. In the same way, the front wishbone portions 10a and 11 a of the second upper arm 10 and the second lower arm 11, respectively, are pivotally connected to the rigid frame 17 through pivotable connections 17c and 17a, respectively. The rear wishbone portions 13b and 11 b of the first lower arm 13 and the second lower arm 11, respectively, are pivotally connected to the rigid frame 17 through pivotable connections 17e and 17f, respectively. The rigid frame 17 firmly supports an actuating device comprising two electric motors 16 and a reduction gear 15 adapted to be activated by said two electric motors 16 through one or two transmission belts 15a (two in the case of figures 1, 2a and 2b), each of which transmits the torque from the corresponding motor to the input shaft of the reduction gear. Moreover, the reduction gear comprises a rotatable shaft 15b to which there is firmly fixed a tilting crank 14; as it will become more apparent with the following disclosure, rotating the rotatable shaft 15b results in the tilting crank being tilted. However, it has to be noted that different actuating devices may be implemented in the suspension tilting module and/or system according to the present invention; for instance, depending on the circumstances, the electric motors and the reduction gear may be replaced by an hydraulic actuating device, for instance a hydraulic actuating device comprising an hydraulic pump or the like. Moreover, it has to be noted that the tilting module according to the present invention is also adapted to be actuated manually, for instance by the driver by means of a transmission system (not depicted in the figures) adapted to act on the tilting crank 14. The rear wishbone portions 12b and 10b of the first upper wishbone arm 12 and the second upper wishbone arm 10 are pivotally connected to the rotatable shaft 15b. The suspension structure further comprises a first steering arm or upright 9 adapted to rotatably support a first wheel 2, as well as a second steering arm or upright 8 adapted to rotatably support a second wheel 3. The first upright 9 is supported by the first upper arm 12 and the first lower arm 13. In particular, the first upright 9 is pivotally connected to the first upper and lower arms 12 and 13 through pivotable connections 9a and 9b, respectively. In the same way, the second upright 8 is supported by the second upper arm 10 and the second lower arm 11; in particular, the second upright 8 is pivotally connected to the second upper arm 10 an the second lower arm 11 through pivotable connections 8a and 8b, respectively. The pivotable connections 9a, 9b, 8a and 8b allow both steering and tilting of the two wheels 2 and 3. Two motors 4 and 5 are received in the hubs of the wheels 3 and 2, respectively; moreover, in figure 1, reference numeral 6 identifies a brake disk of the wheel 3. A corresponding brake disk, even if not depicted in the drawings, is provided on the wheel 2. The suspension structure comprises moreover two shock absorbers 18 pivotally connected to both the tilting actuator or crank 14 and to the upper wishbone arms 10 and 12. In particular, a first shock absorber 18 is pivotally connected to the actuating crank 14 through a pivotable connection 14a and to the second upper arm 10 through a pivotable connection 18b. In the same way, a second shock absorber 18 is pivotally connected to the tilting actuator or crank 14 through a pivotable connection 14b and to the first upper arm 12 through a further pivotable connection 18a. In the embodiment depicted in figures 1, 2a and 2b (see in particular figure 1 and figure 2b) the two shock absorbers 18 are connected to the rear wishbone portions 10b and 12b, respectively; in particular, this is due to the fact that the pivoting crank 14 is provided, in this embodiment, at the rear end portion of the gearbox 15. However, it would also be possible to pivotally connect the two shock absorbers 18 to the front wishbone portions 12a and 10a, respectively, for instance by providing the pivoting crank 14 on the front end portion of the gearbox 15. Moreover, as it will become apparent from the following disclosure, embodiments are also possible wherein the shock absorbers are pivotally connected to transversal rods connecting the front end rear wishbone portions of the first and second upper wishbone arms. Finally, in figures 2a and 2b, reference numeral 20 identifies a road or ground on which a vehicle implementing the tilting module and system depicted therein is assumed to travel.

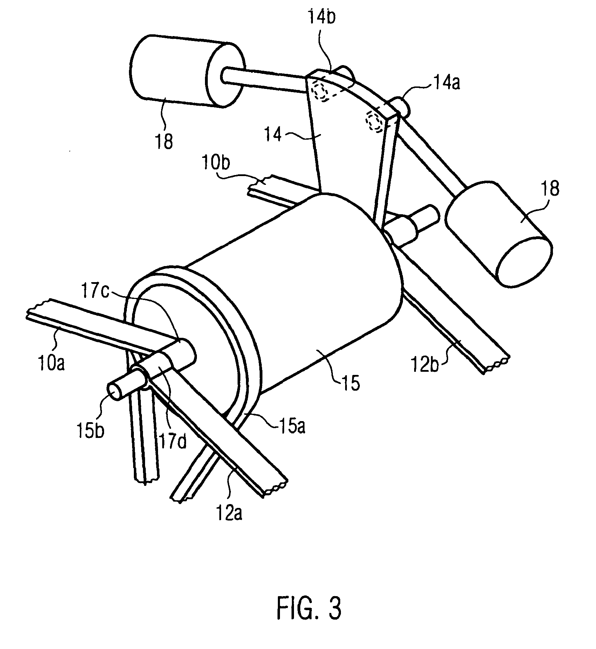

Before proceeding with the description of the way tilting is performed in the case of the tilting module and system depicted in figures 1, 2a and 2b, an alternative solution will be described in the following with reference to figure 3 relating to the way the wishbone arms of the suspension structure may be disposed; in particular, in figure 3, those parts already described with reference to figures 1, 2a and 2b are identified by the same reference numerals whilst some of the parts depicted in figures 1, 2a and 2b are omitted in figure 3 for reasons of clarity.

The most important aspects of the solution depicted in figure 3 relate to the fact that according to this solution, the front wishbone portions 12a and 10a of the first upper arm 12 and the second upper arm 10 are pivotally connected to the rotating shaft 15b of the gearbox 15. The solution depicted in figure 3 allows to further reduce the complexity of the suspension structure as well as its dimensions; the reciprocal disposition of the rear wishbone portions 12b and 10b, however, is not modified, as well as the reciprocal disposition of the pivoting crank 14 and the shock absorbers 18 which, as stated above, are pivotally connected to said pivoting crank 14 through pivotable connections 14a and 14b. However, as it will become apparent from the following disclosure, embodiments are also possible, wherein all of the rear and front portions of all of the first and second upper wishbone arms and the lower wishbone arms are pivotally connected to the rigid frame 17.

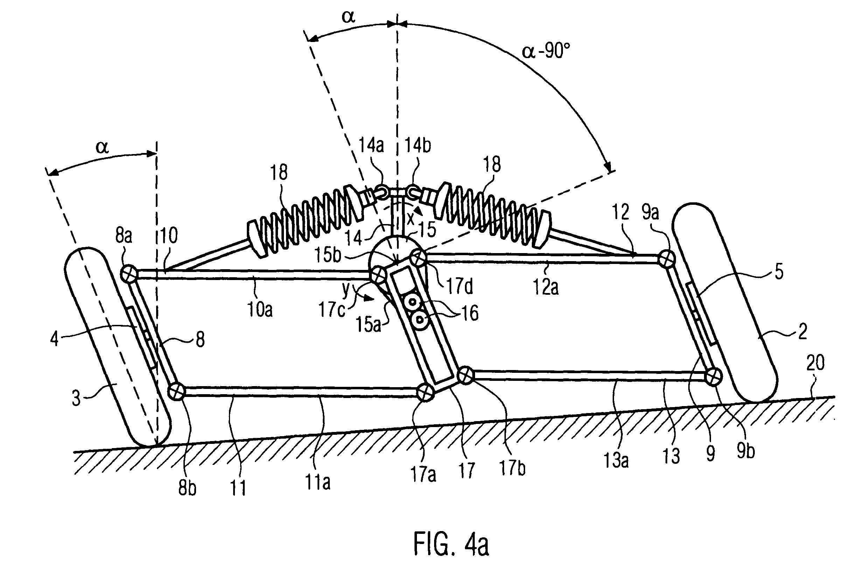

In the following, with reference to figure 4a, a description will be given of the tilting behavior of the tilting module and system of figures 1, 2a and 2b; again, in figure 4a, those component parts already described with reference to previous figures are identified by the same reference numerals.

As soon as tilting of the vehicle implementing the tilting module and system depicted in figure 4a is required (for instance, during cornering of the vehicle) electrical current is supplied to the electric motors 16; accordingly, the two electric motors 16 are activated, resulting in the gearbox 15 being also activated through the transmission belts 15a. That means that a rotational impulse is given to the rotatable shaft 15b. Assuming that said rotating impulse is such as to rotate the rotatable shaft 15b in the direction of rotation x depicted in figure 4a, a corresponding tilting impulse is also given to the tilting crank 14 so as to tilt this toward the right in figure 4a. Accordingly, a corresponding displacement impulse is given to the suspension structure through the shock absorbers 18. However, in view of the resistance exerted by the suspension structure, neither the tilting actuator or crank 14 is tilted to the right nor the suspension structure is displaced into the same direction. However, the resistance exerted by the suspension structure results in a reverse torque arising, with said reverse torque acting on the case of the gearbox 15, resulting in said gearbox 15 being rotated in a direction contrary to the direction x, namely in the direction y depicted in figure 4a. Since the gearbox 15 is firmly fixed to the rigid frame 17, also this rigid frame 17 is rotated of an angle α as a function of the rotating impulse originally given to the rotatable shaft 15b and the tilting crank 14. As stated above, the support arms 10, 11, 12 and 13 are either pivotally connected to the rigid frame 17 through the pivotable connection 17a, 17b, 17c, 17d, 17e and 17f or the rotatable shaft 15b (see in particular figure 2b). Moreover, the uprights 9 and 8 are pivotally connected to the suspension arms 12, 13 and 10, 11, respectively, through the further pivotable connections 9a, 9b, and 8a, 8b. Finally, the shock absorbers 18 are pivotally connected to the suspension arms 8 and 12 through corresponding pivotable connections 18b and 18a. Accordingly, the rotation of the rigid frame 17 of an angle α (see figure 4a) results in the whole suspension structure being tilted as depicted in figure 4a together with the wheels 3 and 2 which, as depicted in figure 4a are also tilted of the same angle α. Obviously, the same considerations as stated above also apply in the case of a rotating impulse in the direction contrary to the direction x being given to the rotatable shaft 15b and the tilting crank 14; in this case, the suspension structure would be tilted in a corresponding contrary direction.

It results, therefore, from the above that the tilting module and system according to the present invention is an active tilting module and system, namely a module and system wherein the tilting function is obtained through the action of an actuating device which may comprise one or more electric motors eventually in combination with a gearbox connected to said electric motors through transmission belts; alternatively, different actuating means may be used such as, for instance, hydraulic actuating means or the like. In the same way, equivalent transmission means may be use instead of the transmission belt 15a, or the tilting module may even be actuated manually.

It has, moreover, to be appreciated that rotating the rigid frame 17 of an angle α as depicted in figure 4a results in the whole vehicle being tilted in the same angle α since the rigid frame 17 is adapted to be firmly fixed to the chassis or body of the vehicle; accordingly, the resultant of the gravity and the centrifugal forces acting on the vehicle is kept oriented along the vertical body axis of the vehicle, thus allowing to avoid or at least minimize the rollover risk even if the track of the vehicle is narrow when compared to that of conventional vehicles.

For the purpose of exploiting the tilting function, the vehicle implementing the tilting module and/or system according to the present invention may be equipped with sensing means adapted to collect data relating to the dynamic behavior of the vehicle so as to activate the actuating means (the electric motor 16 and the gearbox 15 in the case of the system depicted in figure 4a) as a function of the data collected. In particular, the sensing means may be of the kind adapted to collect data relating to the lateral acceleration and/or forces of the vehicle. Accordingly, as soon as the vehicle approaches a curve or cornering and a driving action is exerted by the driver, the resulting lateral acceleration acting on the vehicle may be detected and measured and a corresponding signal may be sent to a central unit adapted to activate the actuating means, thus resulting in the vehicle being tilted so as to compensate the lateral acceleration felt by the vehicle. This solution, in particular, allows to compensate any lateral acceleration, i.e. also lateral acceleration arising in situation other than during cornering. For instance, in the case of lateral wind, also the resulting lateral acceleration acting on the vehicle can be detected and the vehicle can be tilted contrary to the lateral wind and also in the case of the vehicle traveling on a straight road.

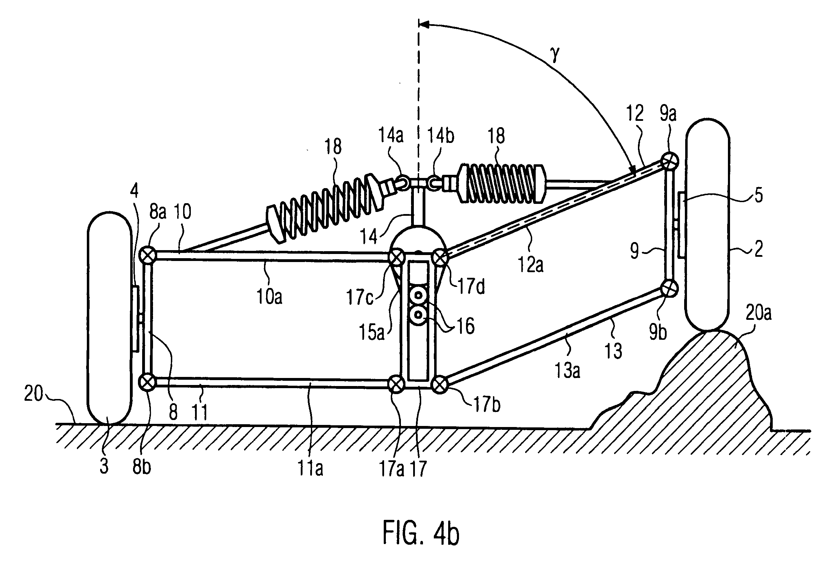

When one of the two wheels 2 and 3 crosses a bump, the tilting module and/or system according to the present invention behaves as depicted in figure 4b, where like features depicted therein are identified by like reference numerals.

In particular, in the example of figure 4b, it is assumed that the wheel 2 crosses a bump 20a of the surface of the road 20; in this case, as depicted in figure 4b, the tilting module and/or system does not work because the vertical displacement of the wheel 2 is absorbed by the shock absorber 18. In particular, this is due to the irreversibility of the gearbox 15 connected to the tilting crank 14, which, in turn, is connected to the shock absorber 18 through the pivotable connection 14b and 14a (see figure 2b). Accordingly, the crank 14 is not tilted as a consequence of the perturbation acting on the suspension structure but only the wheel 2 is lifted as depicted in figure 4b. The rigid frame is therefore not rotated and the vehicle is not tilted.

Moreover, the way the vertical displacement of the wheel 2 is "absorbed" by the shock absorber 18 may be summarized as follows. As depicted in figure 4b, a vertical displacement of the wheel 2 results in the suspension structure or system being also vertically displaced; accordingly, a force is exerted against the shock absorber 18 and a corresponding reaction or force is exerted by the shock absorber 18 on the suspension structure (and, therefore, on the wheel 2) contrary to the vertical displacement of the wheel, with said force varying in a linear manner as a function of the vertical displacement of the wheel 2. In other words, the resilient force exerted by the shock absorber 18 on both the suspension structure and the wheel 2 is proportional to the vertical displacement of the wheel 2. That means that high spring forces are exerted by the shock absorber 18 on the wheel 2 only in the case of large displacements of the wheel 2.

Although this behavior of the shock absorber 18 may be accepted in some circumstances, shock absorbing means with non-linear characteristics may be preferred in other circumstances such as, for example, in the case of light vehicles where the mass of the passengers and luggage is an important fraction of the overall mass of the vehicle. That is to say that shock absorbing means with a stiffness increasing with the load, i.e. with a stiffness increasing in a non-linear manner with the load may be preferred for the purpose of improving the comfort and the dynamic of the vehicle; in fact, shock absorbing means with a stiffness increasing with the load and/or the vertical displacement of the wheels may allow to keep the natural frequency of the suspended mass at a fairly constant value. Moreover, shock absorbing means with a stiffness increasing non-linearly or more than proportionally as a function of the vertical displacement of the wheels may allow to keep the vertical displacement of the wheels lower than a predefined value whilst this is not possible in the case of shock absorbing means where the stiffness is constant.

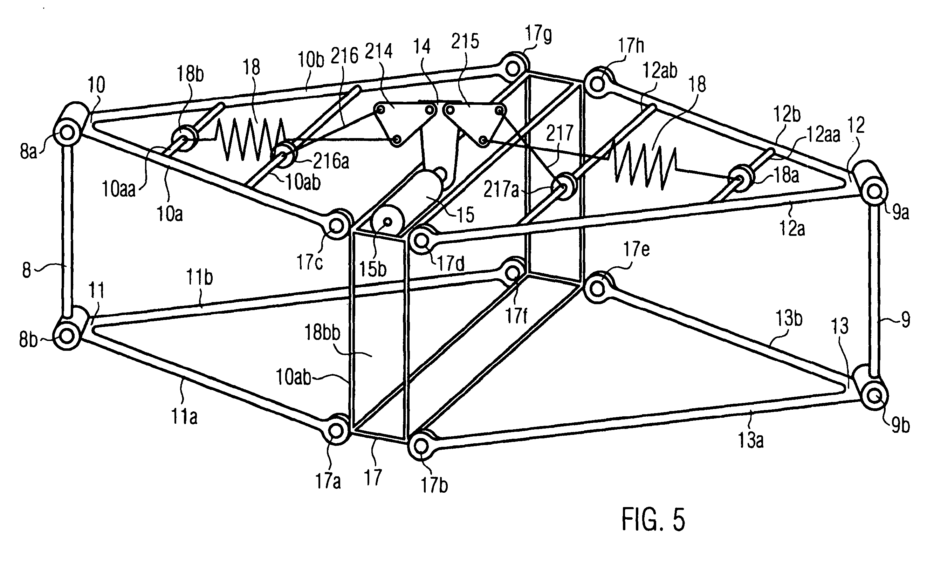

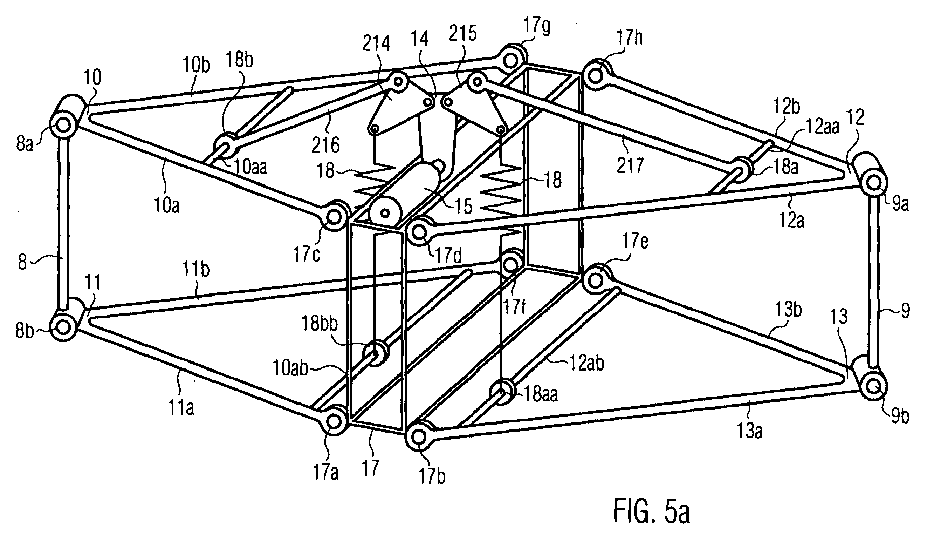

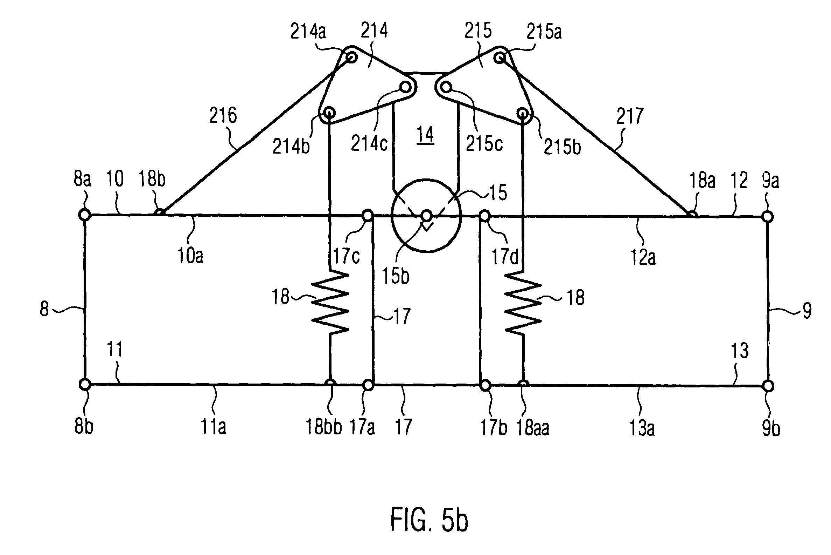

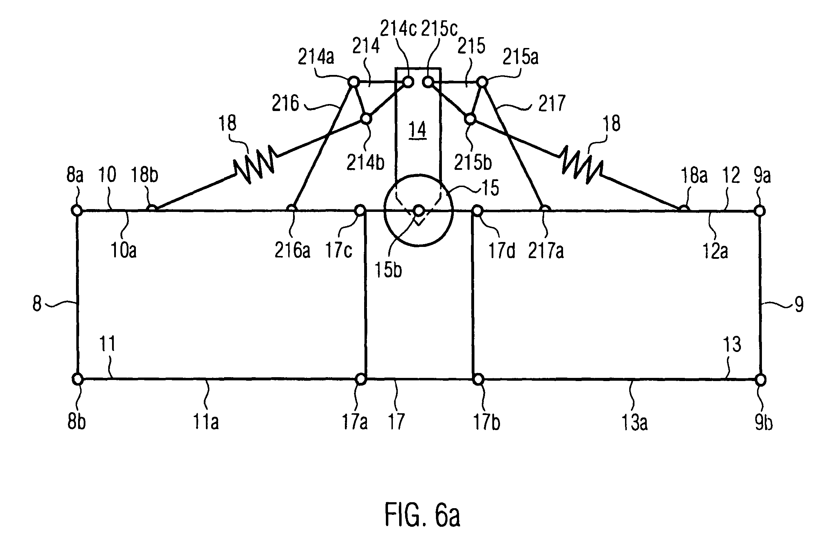

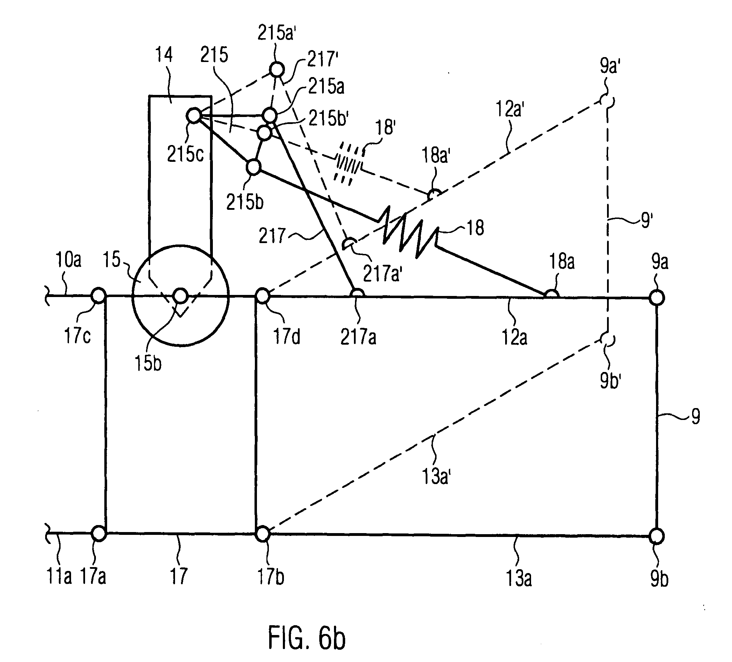

In the following, an embodiment of the suspension tilting module according to the present invention will be described with reference to figures 5, 6a and 6b, with this module implementing or being equipped with shock absorbing means adapted to exert a reaction force against vertical displacements of the wheels which varies or increases in a non-linear manner as a function of said vertical displacement of the wheels. These shock absorbing means will also be referred to in the following as "progressive" shock absorbing means, meaning that the force exerted by said shock absorbing means on the wheels in the case of vertical displacement varies progressively i.e., non-linearly a function of said vertical displacement. Again, in figures 5, 6a and 6b, those component parts and/or features already described above with reference to previous figures are identified by the same reference numerals.

For the sake of clarity, in figures 5, 6a and 6b, simply the suspension tilting module according to the present invention is depicted whilst other component parts belonging to the suspension tilting system, such as , for instance, the wheels and the driving modules have been omitted. A first important difference between the module of figures 5, 6a and 6b and the modules according to the embodiments described above with reference to other figures relates to the fact that, in the suspension tilting module of figures 5, 6a and 6b, all of the wishbone arms 10, 11, 12 and 13 are pivotally connected to the rigid frame. In particular, the first upper wishbone arm 12, is pivotally connected to the rigid frame 17 through pivotable connections 17b and 17h. Similarly, the first lower wishbone arm 13 is pivotally connected to the rigid frame 17 through pivotable connections 17b and 17e. The second upper wishbone arm 10 is pivotally connected to the rigid frame 17 through corresponding pivotable connections 17c and 17g; finally, the second lower wishbone arm 11 is pivotally connected to the rigid frame 17 through corresponding pivotable connections 17a and 17f. This assembly may be preferred in the case of large or broad vehicles; in fact, since the rigid frame 17 is adapted to be firmly fixed to the chassis of the vehicle, a larger rigid frame may be required. Accordingly, in this case, the solution of figures 5, 6a and 6b, wherein all of the wishbone arms are pivotally connected to the rigid frame 17 may be preferred. A further important difference between the embodiment of figures 5, 6a and 6b and the embodiments described above with reference to previous figures relates to the fact that the embodiment of figures 5, 6a and 6b comprises, in addition to the two shock absorbers 18, triangular shaped rocker arms 214 and 215 pivotally interposed between the shock absorbers 18 and the tilting crank 14; moreover, connection rods 216 and 217 are provided, pivotally interposed between the rocker arms 214 and 215, respectively, and the suspension wishbone structure. The rocker arms 214 and 215, the connection rods 216 and 217 and the shock absorbers 18 define, in combination, the shock absorbing means of the suspension tilting module according to this embodiment. The resilient shock absorbers 18 are pivotally connected to the first and second upper wishbone arms 12 and 10, respectively, through corresponding pivotable connections 18a and 18b. As apparent from figure 5, these pivotable connections 18a and 18b are provided on transversal rods 12aa and 10aa, respectively, with the transversal rod 12aa connecting the rear wishbone portion 12b and the front wishbone portion of the first upper wishbone arm 12, whilst the transversal rod 10aa connects the rear wishbone portion 10b and the front wishbone portion 10a of the second upper wishbone arm 10. The connection rod 217 is pivotally interposed between the rocker arm 215 and the transversal rod 12ab of the suspension structure, with this transversal rod 12ab connecting the rear wishbone portion 12b and the front wishbone portion 12a of the first wishbone arm 12; in particular, the connection rod 217 is pivotally connected to the rocker arm 215 and the transversal rod 12ab through corresponding pivotable connections 215a and 217a (see figure 6a). Similarly, the connection rod 216 is pivotally interposed between the rocker arm 214 and the transversal rod 10ab, with this transversal rod 10ab connecting the rear wishbone portion 10b and the front wishbone portion 10a of the second upper wishbone arm 10. In particular, the connection rod 216 is pivotally connected to the rocker arm 214 and the transversal rod 10ab through corresponding pivotable connections 214a and 216a (see figure 6b). With reference now in particular to figure 6a, it appears clearly that the rocker arm 215 is pivotally connected to both the tilting crank 14 and the shock absorber 18 (the right shock absorber in figure 6a) through corresponding pivotable connections 215c and 215b. Similarly, the rocker arm 214 is pivotally connected to both the tilting crank 14 and the shock absorber 18 (the left shock absorber in figure 6a) through corresponding pivotable connections 214c and 214b. As it will become more apparent with the following disclosure, the pivotable connections 215c, 215b and 215a of the rocker arm 215 allow the rocker arm 215 to be rotated with respect to the tilting crank 14. Similarly, the pivotable connections 214a, 214b and 214c of the rocker arm 214 allow the rocker arm 214 to be rotated with respect to the tilting crank 14.

The behavior of the suspension tilting module of figures 5, 6a and 6b during tilting is similar to that of the suspension tilting modules according to the embodiments described above with reference to previous figures; accordingly, tilting of the module depicted in figures 5, 6a and 6b will not be described in further detail. On the contrary, the behavior of the tilting module of figures 5, 6a and 6b in the case of vertical displacement of one or both of the two wheels 2 and 3 (not depicted in figures 5, 6a and 6b), for instance due to one or both of said two wheels crossing a bump) differs from that of the previous embodiments and will, therefore be described in detail in the following with reference to figure 6b, wherein it is assumed that the right portion in figure 6b of the suspension structure is subjected to a vertical displacement and wherein, therefore, for the sake of clarity and convenience, the left portion of the suspension tilting module and its suspension structure is omitted.

In figure 6b, the final position assumed by the wishbone arms, the shock absorber 18, the connection rod 217, the rocker arm 215 and the corresponding pivotable connections 18a, 217a, 215a, 215b and 215c due to a vertical displacement of the wheels (not depicted in figure 6b) rotatably supported by the upright 9 is identified by the dashed lines; the same reference numerals identifying these component parts in normal condition are also used for identifying these component parts when the suspension tilting module is vertically displaced, the only difference being that, in this displaced position, a prime is added to said reference numerals. Accordingly, as an example, whilst the front portion of the first upper wishbone arm in normal conditions is identified by the reference numeral 12a, said front portion of the first upper wishbone arm is identified, in the displaced condition, by the reference numeral 12a'. As apparent from figure 6b, in the case of a vertical displacement as depicted therein, the tilting crank 14 is not tilted due to the irreversibility of the gear 15. Accordingly, the vertical displacement depicted in figure 6b results in a force being exerted on the shock absorber 18 and the rocker arm 215 through the connection rod 217. In particular, a compression force is exerted on the shock absorber 18, whilst as depicted in figure 6b, the rocker arm 215 is rotated about the pivotable connection 215c so as to assume the final position identified by the reference numerals 215c, 215a' and 215b'. Accordingly, an additional compression force is exerted on the shock absorber 18, due to this rotation of the rocker arm 215. That means that the shock absorber 18 is not only subjected to the compression force it would be subjected if the shock absorber 18 would be directly connected to the crank 14 (without the rocker arm 215 being interposed therebetween and without the connection rod 217 being interposed between the rocker arm 215 and the first upper wishbone arm 12), namely to a compression force varying linearly as a function of the vertical displacement as in the case of the embodiment depicted in figure 4b, but an additional compression force is exerted on the shock absorber 18, with this compression force being due to the rotation of the rocker arm 215. Accordingly, the total force acting on the shock absorber 18 is due to both the vertical displacement of the suspension structure and the rotation of the rocker arm 215, with this total compression force varying therefore in a non-linear manner as a function of the vertical displacement or, in other words, with this compression force varying progressively as a function of the vertical displacement. It results, therefore, that the corresponding contrary force exerted by the shock absorbing means (by the shock absorber 18) on the first upper wishbone arm 12 and, therefore, on the right portion of the suspension system in figure 6b and, accordingly, on the wheel, contrary to the vertical displacement of the wheel is also not simply proportional to the vertical displacement but varies progressively, i.e. in a non-linear manner, as a function of said vertical displacement. It results, therefore, from the above that the suspension tilting module depicted in figures 5, 6a and 6b, equipped with the suspension means defined by the shock absorbers 18, the rocker arms 214 and 215 and the connection rods 216 and 217 allows to better compensate the vertical displacement of the wheels supported by said module, thus allowing to limit this vertical displacement to a predefined value. Accordingly, a non-linear characteristic is inserted between the vertical displacement of the wheels and the shock absorbers 18, so that small vertical displacements of the wheels generate large compressions on the shock absorbers, thus resulting in large forces being exerted on the suspension structure contrary to the vertical displacement of the wheels. In other words, the ratio between the displacement of the wheels and the compression of the shock absorbers 18 is increased, meaning that the stiffness of the force-displacement characteristic of the suspension system is also increased.

The non-linear characteristic can be varied by varying the dimensions of the rocker arms 214 and 215 and the position of the pivotable connections 217a and 216a of the connection rods 217 and 216; in particular, if the pivotable connections 217a and 216a are placed nearer to the tilting crank 14, the resultant total compression exerted on the shock absorbers 18 increases, so that also the corresponding reaction force exerted by the shock absorbers 18 contrary to the vertical displacement of the wheels increases.

In the following, with reference to figures 5a and 5b, an alternative disposition of the component parts of the tilting module according to the present invention described above with reference to figures 5, 6a and 6b will be described, wherein, as usual, like reference numbers identify like component parts and/or features.

The embodiment depicted in figures 5a and 5b substantially corresponds to that disclosed above with reference to figures 5, 6a and 6b but differs from this embodiment in that the shock absorbers 18 and the connection rods 216 and 217 are disposed differently. In particular, in the embodiment of figures 5a and 5b, the right shock absorber 18 is pivotally disposed between the rocker arm 215 and a transversal rod 12ab connecting the rear and front wishbone portions 13b and 13a of the first lower wishbone arm 13; in particular, the right shock absorber 18 is pivotally connected on the one side to the rocker arm 215 through a pivotable connection 215b and, on the other side, to the transversal rod 12ab through a corresponding pivotable connection 18aa. In the same way, the left shock absorber 18 is pivotally interposed between the rocker arm 214 and a transversal rod 10ab connecting the rear and front wishbone portions 11 b and 11 a of the second lower wishbone arm 11; in particular, the left shock absorber 18 is pivotally connected on the one side to the rocker arm 214 through a corresponding pivotable connection 214b and, on the other side, to the transversal rod 10ab through a corresponding pivotable connection 18bb. Moreover, the right connection rod 217 is pivotably interposed between the rocker arm 215 and a transversal rod 12aa connecting the rear and front wishbone portions 12b and 12a of the first upper wishbone arm 12; in particular, the right connection rod 217 is pivotally connected on the one side to the rocker arm 215 through a corresponding pivotable connection 215a and, on the other side, to the transversal rod 12aa through a corresponding pivotable connection 18a. In a similar way, the connection rod 216 is pivotally interposed between the rocker arm 214 and a transversal rod 10aa connecting the rear and front wishbone portions 10b and 10a of the second upper wishbone arm 10; in particular, the connecting rod 216 is pivotally connected on the one side to the rocker arm 214 through a corresponding pivotable connection 214a and, on the other side, to the transversal rod 10aa through a corresponding pivotable connection 18b. The behavior of the module depicted on figures 5a and 5b during tilting and/or vertical displacement of one or both of the two wheels supported by the module (not depicted in figures 5a and 5b) is substantially similar to that of the module depicted in figures 5, 6a and 6b and will not be disclosed in more detail, accordingly. However, the solution depicted in figures 5a and 5b may be preferred in those cases in which only a reduced space is at disposal, since this solution allows to reduce the overall dimensions of the module.

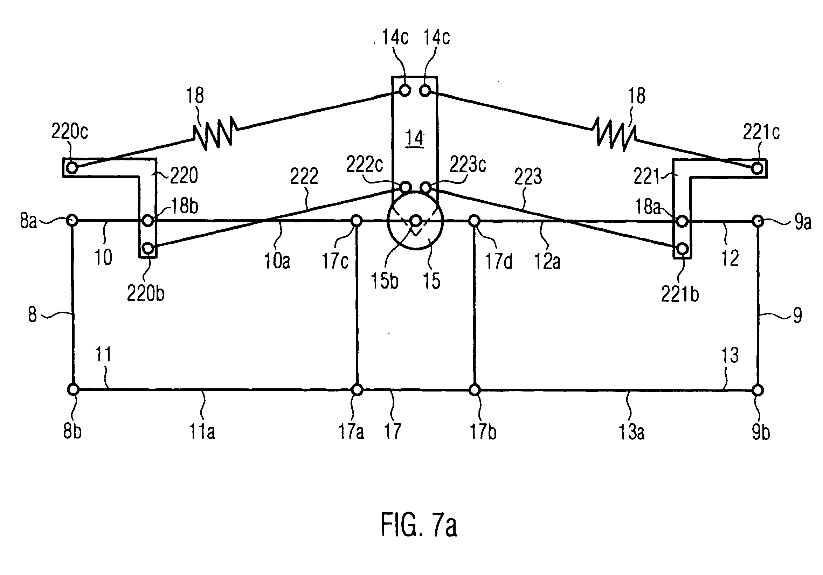

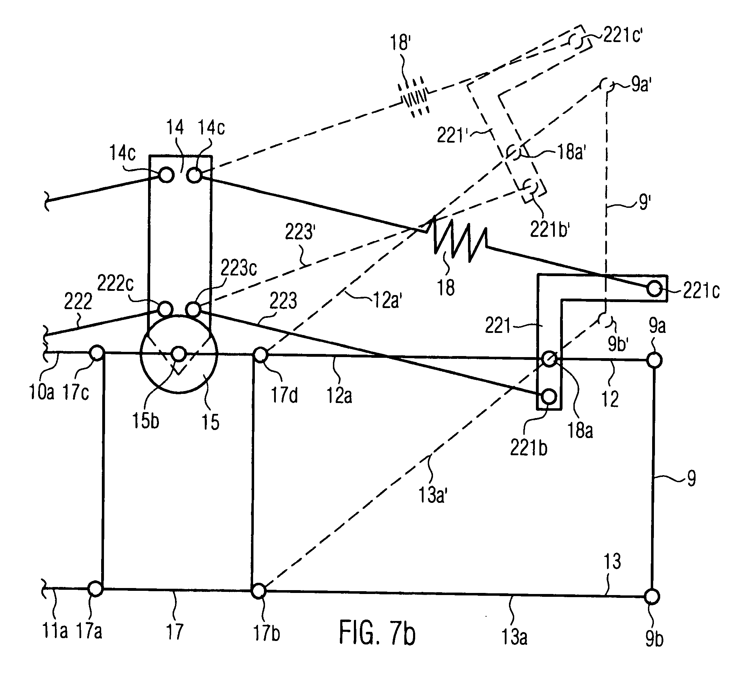

In the following, a further embodiment of the suspension tilting module according to the present invention will be described with reference to figures 7a and 7b, wherein as usual, like component parts and/or features are identified by like reference numerals.

The embodiment depicted in figures 7a and 7b is similar to that described above with reference to figures 5, 6a and 6b; in particular, that means that also the embodiment of figures 7a and 7b is equipped with "progressive" shock absorbing means, namely with shock absorbing means adapted to exert, in the case of a vertical displacement of one or both of the two wheels supported by the module, a force contrary to said vertical displacement varying progressively, i.e. in a non-linear manner, as a function of the vertical displacement. However, the embodiment depicted in figures 7a and 7b differs from that depicted in figures 5, 6a and 6b in that different rocker arms are used. In particular, the rockers arms 214 and 215 of the embodiment of figures 5, 6a and 6b are replaced in the embodiment of figures 7a and 7b by L-shaped rocker arms 220 and 221, respectively. Moreover, the connection rods 216 and 217 of the embodiment of figures 5, 6a and 6b are replaced in the embodiment of figures 7a and 7b by connection rods 222 and 223, respectively. As apparent from figure 7a, the two L-shaped rocker arms 220 and 221 are pivotally connected to the second and first upper wishbone arms 10 and 12, respectively, through corresponding pivotable connections 18b and 18a. The pivotable connections 18b and 18a may be provided on corresponding transversal rods (not depicted in figures 7a and 7b) connecting the rear and front wishbone portions of the second and first upper wishbone arms 10 ad 12. The shock absorbers 18 are pivotally interposed between the rocker arms 220, 221 and the tilting crank 14. In particular, the right shock absorber 18 in figure 7a is pivotally connected to both the tilting crank 14 and the rocker arm 221 through corresponding pivotable connections 14c and 221c. In a similar way, the left shock absorber 18 in figure 7a is pivotally connected to both the tilting crank 14 and the rocker arm 220 through corresponding pivotable connections 14c and 220c. Finally, as apparent from figure 7a, the connection rod 223 (on the right side in figure 7a) is pivotally interposed between the tilting crank 14 and the rocker arm 221; in particular, the connection rod 223 is pivotally connected to both the tilting crank 14 and the rocker arm 221 through corresponding pivotable connections 223c and 221 b. In a similar way, the connection rod 222 (on the left side in figure 7a) is pivotally connected to both the tilting crank 14 and the rocker arm 220 through corresponding pivotable connections 222c and 220b.

In the following, with reference to figure 7b, the behavior of the suspension tilting module depicted therein in the case of a vertical displacement of one of the two wheels will be described.

Also in the case of figure 7b, the final position assumed by the suspension structure, comprising the rocker arms, the shock absorbers and the connection rods is identified by the dashed lines; moreover, the same reference numerals identifying these component parts in normal condition are also used for identifying these component parts when the suspension tilting module is vertically displaced, the only difference being that, in this displaced position, a prime (') is added to said reference numerals. Accordingly, as an example, whilst the shock absorber in its normal position is identified by the reference numeral 18, the same shock absorber, in its displaced position is identified by the reference numeral 18'. Moreover, in figure 7b, only the right portion of the suspension tilting module is shown for the sake of clarity and convenience.

As stated above, the two rocker arms 220 and 221 are adapted to be rotated; in particular, this is due to the pivotable connections 18b and 18a through which the two rocker arms are connected to the upper wishbone arms 10 and 12, respectively. In particular, as apparent from figures 7a and 7b, rotation of the two rocker arms 220 and 221 is due to the action exerted on said two rocker arms by the connection rods 222 and 223, respectively. Assuming that the right portion of the suspension module is vertically displaced as depicted in figure 7b, for instance due to the corresponding wheel crossing a bump or the like, it appears clearly from figure 7b that the shock absorber 18 is not only subjected to a compression force varying in a linear manner as a function of the vertical displacement (as it would be the case if the rocker arm 221 was firmly fixed to the wishbone arm 12 and would, therefore, not rotate) but the shock absorber 18 is subjected to an additional compression force which arises due to the rotation of the rocker arm 221. That means that, in the case of a vertical displacement as depicted in figure 7b, the resultant compression force arising and acting on the shock absorber 18 varies progressively, i.e. in a non-linear manner as a function of the vertical displacement. Accordingly, a corresponding reaction force is exerted by the shock absorber 18 on the suspension structure (and, therefore, on the wheel) contrary to the vertical displacement of the wheel, with said reaction force varying progressively, i.e. non-linearly, as a function of said vertical displacement. Accordingly, also in the case of the embodiment depicted in figures 7a and 7b, reaction forces arise in the case of a vertical displacement of one or both of the two wheels, with said forces acting on said two wheels contrary to said vertical displacement and varying in a non-linear manner as a function of said vertical displacement. That means, therefore, that the stiffness of the shock absorbing means defined by the shock absorbers, the connection rods and the rocker arms increases in a non-linear manner as a function of the vertical displacement of the wheels so that large forces are exerted on the wheels also in the case of small vertical displacements. Also in the case of the module of figures 7a and 7b, the non-linear characteristic between the vertical displacement of the wheels and the forces arising and acting on the wheels contrary to said vertical displacements can be varied and/or adjusted by varying the position of the rocker arms 220 and 221 with respect to the tilting crank 14, and by varying the relative position of the pivotable connections 220c, 220b and 18b on the rocker arm 220, as well as that of the pivotable connections 221 c, 221 b and 18a on the rocker arm 221. In particular, if the rocker arms 220 and 221 are placed nearer to the tilting crank 14, the compression on the shock absorbers 18 increases, thus resulting in an increased ratio between the compression on the shock absorbers and the vertical displacement of the wheels. Moreover, the characteristic may also be varied by varying the overall dimension of the rocker arms 220 and 221.

Although two embodiments of the suspension tiling module according to the present invention have been described above with reference to figures 5 , 6a, 6b and 7a, 7b, respectively, with said two different embodiments being equipped with corresponding different "progressive" shock absorbing means, it would also be possible to implement said different shock absorbing means in the same suspension tilting module. For instance, the triangular shaped rocker arms 214 and 215 of figures 5, 6a and 6b could be implemented in the embodiment of figures 7a and 7b, along with the connection rods 216 and 217, respectively. In this case, the triangular shaped rocker arms would be pivotally interposed between the shock absorbers 18 and the tilting crank 14 whilst the connection rods 216 and 217 would be pivotally interposed between the triangular shaped rocker arms and the wishbone arms 10 and 12. This would, in particular, allow to obtain an increased non-linear characteristic of the force acting on the wheels in the case of the vertical displacement of the wheels due to the combined action of the triangular shaped rocker arms and the L-shaped rocker arms.

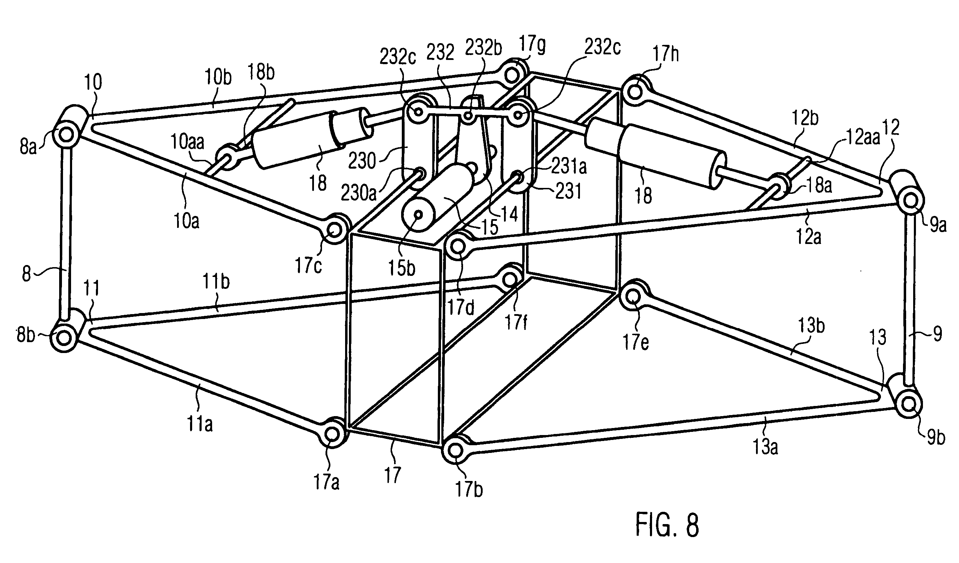

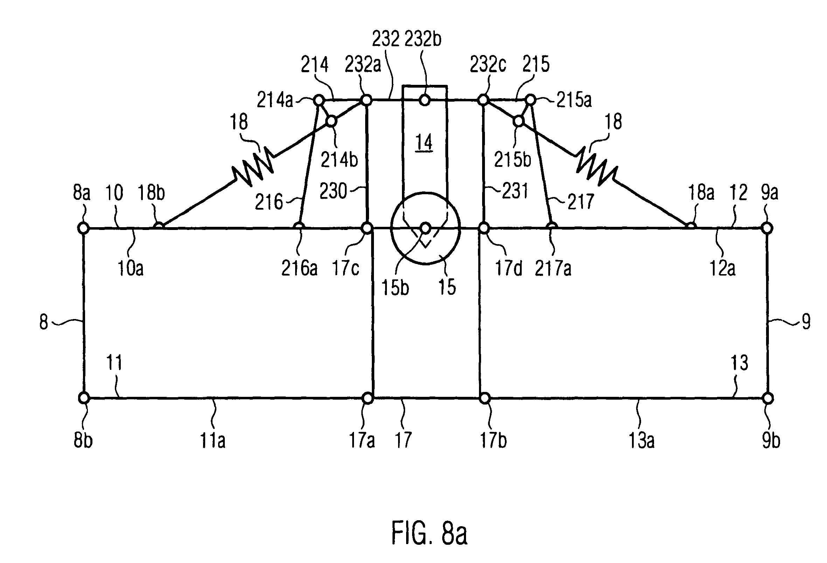

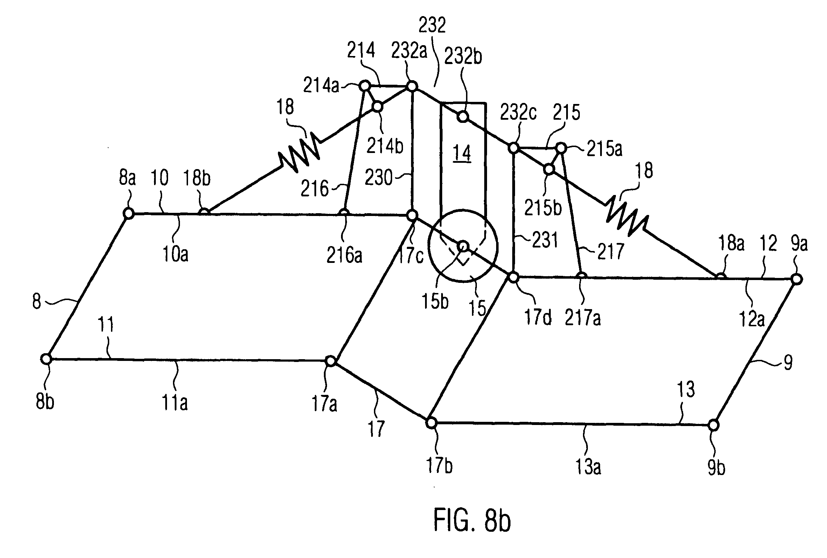

It has been stated above that the embodiments of the suspension tilting module according to the present invention as depicted in figures 5, 6a, 6b, 7a and 7b are suitable to be implemented in broad or lean vehicles, namely in vehicles with increased track. This is, in particular, the reason why these embodiments are usually characterized by a rigid frame 17 of increased width and dimensions with all of the wishbone arms 10, 11, 12 and 13 being pivotally connected to said rigid frame. In fact, since the rigid frame is adapted to be firmly fixed to the chassis of the vehicle, problems could arise in the case of broad vehicles, due to the increased load acting on the rigid frame. However, it has been observed that, in the case of a rigid frame with increased width and dimensions, further problems may arise during tilting of the vehicle, i.e. of the tilting module. In particular, it has been observed that, during tilting, the two wheels are tilted in a different way so that the behavior of the vehicle may not be regarded as equivalent to that of a motorcycle. Accordingly, a further embodiment of the suspension tilting module according to the present invention allowing to overcome this problem will be described in the following with reference to figures 8, 8a and 8b, wherein, as usual, like component parts and/or features are identified by like reference numerals.

As apparent from figures 8, 8a and 8b, the embodiment depicted therein differs from the previous embodiments in that the tilting crank 14 is equipped with additional tilting rods pivotally connected to the tilting crank 14, the rigid frame 17 and the shock absorbers 18. In particular, as apparent from figure 8, a first tilting rod 232 is provided, with said tilting rod 232 being pivotally connected to the tilting crank 14 through a pivotable connection 232b. Moreover, a second tilting rod 230 is provided, with said second tilting rod 230 being pivotally connected on the one side to both the first tilting rod 232 and the shock absorber 18 through a corresponding pivotable connection 232a and, on the other side, to the rigid frame 17 through a corresponding pivotable connection 230a. Similarly, a third tilting rod 231 is provided, with said third tilting rod 231 being pivotally connected on the one side to both the first tilting rod 232 and the shock absorber 18 through a corresponding pivotable connection 232c and, on the other side, to the rigid frame 17 through a corresponding pivotable connection 231 a. As apparent from figure 8, in normal conditions, for instance with the vehicle traveling on a straight road, the first tilting rod 232 is disposed in a position substantially horizontal whilst the second and third tilting rods 230 and 231 are disposed in a position substantially vertical. The provision of the first, second and third tilting rods 232, 230 and 231, as depicted in figure 8, allows to overcome the problems affecting the previous embodiments that the two wheels rotatably supported by the uprights 8 and 9 are not tilted the same way during tilting. In particular, with the embodiment depicted in figures 8, 8a and 8b, this problem is overcome due to the fact that the tilting crank 14 is pivotally linked to the rigid frame resulting in a titling action being exerted on the rigid frame 17 by the tilting crank 14. In other words, whilst in the previous embodiments tilting of the rigid frame 17 was solely due to a corresponding rotation of the case of the gear 15 (firmly fixed to the rigid frame 17) in the present case an additional tilting action is exerted by the tilting crank 14 on the rigid frame 17 through the tilting rods 232, 230 and 231. As it will be explained in more detail below with reference to figure 8b, this results in the left and right portions of the suspension module being tilted the same way, thus resulting in the two opposed wheels being also tilted the same way.

In figure 8, simple shock absorbers 18 are depicted, with said shock absorbers 18 being pivotally connected to the tilting rods and the suspension structure. In particular, the right shock absorber 18 in figure 8 is connected, on the one side to both the first and third tilting rods 232 and 231 through a corresponding pivotable connection 232c and, on the opposite side to a transversal rod 12aa (connecting the rear wishbone portion 12b and the front wishbone portion 12a of the wishbone arm 12) through a corresponding pivotable connection 18a. Similarly, the left shock absorber 18 in figure 8 is pivotally connected, on the one side, to both the first and second tilting rods 232 and 230 through a corresponding pivotable connection 232a and, on the opposite side, to a transversal rod 10aa (connecting the rear wishbone portion 10b and the front wishbone portion 10a of the wishbone arm 10) through a corresponding pivotable connection 18b. However, the first, second and third tilting rods 232, 230 and 231 may also be implemented in a suspension tilting module according to the present invention in combination with different shock absorbing means, for instance in combination with progressive shock absorbing means of the kind disclosed above with reference to figures 5, 6a and 6b, or even with the shock absorbing means depicted in figures 7a and 7b. In the case of the shock absorbing means of figures 5, 6a and 6b, the resulting suspension tilting module is depicted in figure 8a, wherein, not only the tilting means depicted in figure 8 (comprising the tilting crank 14 and the first, second and third tilting rods 232, 230 and 231) are implemented, but also the triangular shaped rocker arms 214, 215 and the corresponding connection rods 216 and 217. In particular, in this case, as apparent form figure 8a, the triangular shaped rocker arm 214 is pivotally connected , on the one side, to the first and second tilting rods 232 and 230 through a corresponding pivotable connection 232a and, on the other side, to the shock absorber 18 through a corresponding pivotable connection 214b. Moreover, a connection rod 216 is pivotally interposed between the rocker arm 214 and the suspension arm 10 through corresponding pivotable connections 214a and 216a. In a similar way, the rocker arm 215 is pivotally connected, on the one side, to the first and third tilting rods 232, 231 through a corresponding pivotable connection 232c and, on the opposite side, to the shock absorber 18 through a corresponding pivotable connection 215b. Moreover, a connection rod 217 is pivotally interposed between the rocker arm 215 and the wishbone arm 12 through corresponding pivotable connections 215a and 217a. It has, however, to be appreciated that also the progressive shock absorbing means described above with reference to figures 7a and 7b are adapted to be implemented in the embodiment of the suspension tilting module depicted in figure 8 either in replacement of the progressive shock absorbing means described above with reference to figures 5, 6a and 6b and depicted in figure 8a or in combination with said progressive shock absorbing means.

The tilting behavior of the embodiment of the suspension tilting module according to the present invention depicted in figures 8 and 8a will be described in the following with reference to figure 8b.

As soon as tilting of the module is required (for instance, during cornering of the vehicle implementing this module) a tilting impulse is given to the tilting crank 14; for instance, this can be obtained by supplying electrical current to the two electric motors 16 (not depicted in figure 8b) resulting in a rotating impulse being given to the rotatable shaft 15b through the reduction gear 15. However, as stated above, a tilting impulse could even be manually given to the tilting crank 14 or, alternatively, by means of a hydraulic system acting on the rotatable shaft 15b. A tilting impulse being given to the tilting crank 14 results in a corresponding displacement impulse being given to the suspension structure through the shock absorbers 18; however, in view of the resistance exerted by the suspension structure, neither the tilting actuator nor the crank 14 is tilted, nor is the suspension structure displaced. However, the resistance exerted by the suspension structure results in a reverse torque arising, with said reverse torque acting on the case of the gearbox 15, resulting in said gearbox being rotated and the rigid frame being tilted together with the whole suspension system and the wheels supported by said suspension system. However, tilting of the rigid frame 17 is helped, in the embodiment depicted in figures 8, 8a and 8b, by the action exerted by the tilting crank 14 through the tilting rods 232, 230 and 231. In particular, as depicted in figure 8b, the first tilting rod 232 is also tilted together with the rigid frame 17 whilst the second and third tilting rods 230 and 231 are substantially kept in their vertical position. Due to the additional action exerted by the tilting crank 14 through the tilting rods 232, 230 and 231 the roll center of the rigid frame 17 (substantially corresponding to the rotatable shaft 15b) does not move during tilting of the module, so that corresponding and equivalent tilting behaviors of the left and right portions of the tilting module are obtained, thus resulting in the two wheels being tilted the same way.

A further problem affecting suspension tilting modules relates to the dynamic behavior of the tilting module and, therefore, of the tilting vehicle implementing this module. In particular, this problem is related to the coupling between the roll stiffness (Kr) and the vertical stiffness (Ks) of the module, wherein the expression "roll stiffness" has to be understood a meaning the resistance of the system to rolling and tilting, whilst the expression "vertical stiffness" has to be understood as meaning the resistance of the module against vertical displacement, for instance due to one or both wheels crossing a bump. In particular, in suspension tilting modules of the kind disclosed above, this problem arises due to the link between the tilting crank and the shock absorbing means. The stiffness (K) of the shock absorbers determines the values of Kr and Ks. Imposing a value to Kr, considering the roll natural frequency, allows to choose the stiffness of the shock absorbers, so that Ks may be determined. Similarly, when the comfort of the vehicle needs to be taken into consideration, the value of Ks may be selected by opportunely defining Kr. It results, however, that the shock absorbing means are involved in both rolling (tilting) and vertical motion so that Ks and Kr cannot be decoupled. Considering the natural frequencies relating to the roll and to the bump, only one of these can be chosen so that the dynamic behavior of the vehicle cannot be satisfactory.

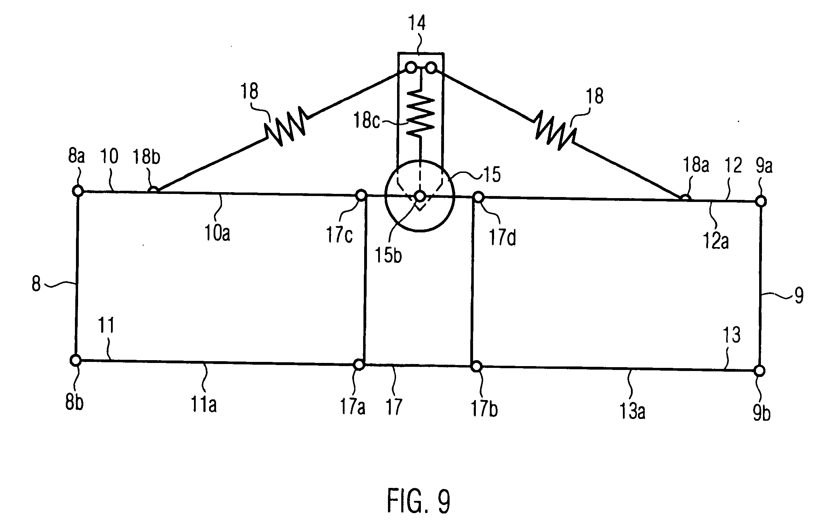

A possible solution allowing to overcome or at least to minimize this problem will be describe in the following with reference to figure 9, wherein as usual, like reference numerals identify like component parts and/or features.

The embodiment of the suspension tilting module according to the present invention depicted in figure 9 differs from the other embodiments previously disclosed in that, the embodiment depicted in figure 9 comprises an additional spring element 18t located on the tilting crank 14. As apparent from figure 9, simple shock absorbers 18 are provided; however, it has to be appreciated that different shock absorbers may be provided, for instance, progressive shock absorbing means as described above with reference to figures 5, 6a, 6b and 7a, 7b; in particular, this progressive shock absorbing means may be provided either singularly or in combination. The additional spring element 18t is linked to the shock absorbers 18 through corresponding anchor points.or pivotable connections. Moreover, the spring element 18t is mounted on the tilting crank 14 and has a stiffness lower than that of the shock absorbers 18. This characteristic allows to decouple the roll stiffness and the vertical stiffness. In fact, if the stiffness of the shock absorbers 18 is higher than that of the spring element 18t, when a vehicle approaches a same obstacle on the wheels (two equal holes or bumps under the wheels), mainly the spring element 18t works. In fact, the shock absorbers 18 behave as rigid elements whilst the spring element 18t works to the effort. Considering the roll behavior (cornering or an obstacle under only one wheel), only the shock absorbers 18 will work.

These considerations on the kinematic behavior of the embodiment depicted in figure 9 illustrate how the roll and the vertical behavior of this embodiment may be decoupled. Accordingly, the dynamic behavior of the vehicle can be optimized. Moreover, applying this solution to a vehicle with progressively shock absorbing means allows to improve the stability and dynamic characteristics of the vehicle.

It has, therefore, been demonstrated that the suspension tilting module according to the present invention allows to overcome the problems or drawbacks affecting the prior art suspension tilting modules. In particular, the adoption of progressive shock absorbing means allows to obtain forces acting against vertical displacement of the wheels with said forces varying progressively, i.e. in a non-linear manner as a function of both the vertical displacement and the load to which the module is subjected. This, in particular, allows to limit the travel of the suspension structure on rough roads and can be exploited to limit the variation of the natural frequency of the suspended mass as a consequence of the load variations. Moreover, the embodiment comprising a tilting system defined by a tilting crank pivotally connected to a parallelogram structure comprising horizontal and vertical tilting rods allow to overcome the problem affecting the prior art modules that the two opposed wheels are not tilted the same way. Finally, the solution wherein an additional spring element is mounted on the tilting crank allows to improve the kinematic behavior of the vehicle. Moreover, other advantages offered by the suspension tilting module according to the present invention may be mentioned such as, for instance, the possibility offered to place driving motors on the hubs of the wheels without negatively affecting the tilting angle. Accordingly, a high transmission efficiency is obtained.

Of course, it should be understood that a wide range of changes and modifications can be made to the embodiments described above without departing from the scope of the present invention. It has, therefore, to be understood that the scope of the present invention is not limited to the embodiments described but is rather defined by the appended claims.

## Claims

1. A suspension tilting module for a wheeled vehicle comprising at least a first and a second wheel (2, 3) disposed on a common axle, said module comprising a suspension structure adapted to support said at least first and second wheels allowing both tilting and vertical displacement of said at least first and second wheels, said suspension structure comprising a rigid frame (17) and suspension arms (10, 11, 12, 13), said module comprising tilting means (14) pivotally connected to said rigid frame (17), so that tilting of said tilting means results in said suspension structure being tilted together with said at least first and second wheels, wherein
said tilting means are connected to said suspension structure through first and second shock absorbing means, so that a vertical displacement of one or both of said first or second wheels (2, 3) results in a force being exerted on one or both of said first and second wheels, respectively, contrary to said vertical displacement,
**characterized in that**
said first and second shock absorbing means comprise first and second resilient shock absorbers (18), respectively, adapted to be resiliently stimulated as a result of a vertical displacement of said first and second wheels, respectively, as well as first and second rotatable means (214, 215, 220, 221) pivotally connected to said first and second resilient shock absorbers, respectively, and adapted to be rotated as a result of a vertical displacement of said first and second wheels, respectively, the rotation of said first and second rotatable means resulting in an additional resilient stimulation being exerted on said first and second resilient shock absorbers, respectively,
wherein said first and second shock absorbing means further comprise first and second connection rods (216, 217, 222, 223), respectively, pivotally connected to said first and second rotatable means, respectively, and adapted to rotate said first and second rotatable means (214, 215, 220, 221), respectively, as a result of a vertical displacement of said first and second wheels, respectively
and wherein said first and second connection rods (216, 217, 220, 221) comprise first and second connection rods (216, 217) pivotally connected to said suspension structure through corresponding pivotable connections (216a, 217a), respectively, as well as to said first and second rotatable means (214, 215), respectively, through corresponding pivotable connections (214a, 215a), respectively; and **in that**
said force varies in a non-linear manner as a function of said vertical displacement.

2. A module as claimed in claim 1,
**characterized in that**
said force increases in a non-linear manner as a function of said vertical displacement.

3. A module as claimed in one of claims 1 or 2,
**characterized in that**
said first and second rotatable means comprise first and second rocker arms (214, 215,) respectively, said first rocker arm (214) being further pivotally connected to said first resilient shock absorber (18) through a
pivotable connection (214b) as well as to said tilting means (14) through a pivotable connection (214c), said second rocker arm (215) being pivotally connected to said second shock absorber through a pivotable connection (215b), as well as to said tilting means (14) through a pivotable connection (215c).

4. A module as claimed in claim 3,
**characterized in that**
said first and second rocker arms (214, 215) are triangle-shaped and **in that** said pivotable connections (214a, 214b, 214c, 215a, 215b, 215c) are disposed at the vertex of said rocker arms.

5. A module as claimed in one of claims 1 to 4,
**characterized in that**
said first and second connection rods (216, 217, 222, 223) comprises first and second connection rods (222, 223) pivotally connected to said tilting means through corresponding pivotable connections (222c, 223c), respectively, as well as to said first and second rotatable means (220, 221), respectively, through corresponding pivotable connections (220b, 221 b), respectively.

6. A module as claimed in claim 5,
**characterized in that**
said first and second rotatable means comprise first and second rocker arms (220, 221,) respectively, said first rocker arm (220) being further pivotally connected to said suspension structure through a pivotable connection (16b) as well as to said first shock absorber (16) through a pivotable connection (220c), said second rocker arm (221) being pivotally connected to said suspension structure through a pivotable connection (18a), as well as to said second shock absorber (18) through a pivotable connection (221 c).

7. A module as claimed in claim 6,
**characterized in that**
said first and second rocker arms are L-shaped.

8. A module as claimed in one of claims 1 to 7,
**characterized in that**
said tilting means (14) further comprise a tilting crank (14), a first tilting rod (232) pivotally connected to said tilting crank, a second tilting rod (230) pivotally connected to both said first tilting rod (232) and said suspension system, and a third tilting rod (231) pivotally connected to both said first tilting rod (232) and said suspension system.

9. A module as claimed in claim 8,
**characterized in that**
said first tilting rod (232) is pivotally connected to said tilting crank (14) through a pivotable connection (232b), **in that** said second tilting rod (230) is pivotally connected to said first tilting rod (232) and said suspension structure through corresponding pivotable connections (232a, 230a), respectively, and **in that** said third tilting rod (231) is pivotally connected to said first tilting rod (232) and said suspension structure through corresponding pivotable connections (232c, 231 a), respectively.

10. A module as claimed in one of claims 1 to 9,
**characterized in that**
said module further comprises an actuating device mechanically coupled to said tilting means, so that activation of said actuating device results in a tilting impulse being given to said tilting means.

11. A module as claimed in claim 10,
**characterized in that**
said actuating device comprises a rotatable shaft (15b) firmly fixed to said tilting means (14).

12. A module as claimed in claim 11,
**characterized in that**
said actuating device comprises at least one electric motor (16) mechanically coupled to said rotatable shaft and adapted to rotate said rotatable shaft.

13. A module as claimed in claim 12,
**characterized in that**
said at least one electric motor (16) is mechanically coupled to said rotatable shaft (15b) through a reduction gear (15).

14. A module as claimed in claim 11,
**characterized in that**
said actuating device comprises an hydraulic system mechanically coupled to said rotatable shaft (15b) and adapted to rotate said rotatable shaft (15b).

15. A module as claimed in one of claims 10 and 11,
**characterized in that**
said actuating device is adapted to be activated manually, so that manual activation of said actuating device results in a tilting impulse being given to said tilting means (14).

16. A module as claimed in one of claims 10 to 15,
**characterized in that**
said suspension structure comprises a rigid frame (17) adapted to be firmly fixed to the chassis of said vehicle, said rigid frame being firmly fixed to said actuating device and pivotally connected to suspension arms (10, 11, 12, 13) of said suspension structure so that activation of said actuating device results in said rigid frame being tilted together with said at least two wheels.

17. A module as claimed in claim 16,
**characterized in that**
said suspension arms comprise a first upper arm (12) and a first lower arm (13) adapted to pivotally support, in combination, a first upright (9), so as to allow tilting of said first upright (9), as well as a second upper arm (10) and a second lower arm (11) adapted to pivotally support, in combination, a second upright (8), so as to allow tilting of said second upright (8), said first and second uprights being adapted to rotatably support said first and second wheels (2, 3) respectively, so that, during tilting of said tilting module, said first and second wheels are tilted together with said first and second uprights.

18. A module as claimed in claim 17,
**characterized in that**
said first and second uprights (9, 8) are adapted to allow steering of said first and second wheels on corresponding steering axes substantially vertical.

19. A driving tilting suspension system for a wheeled vehicle comprising at least a first and a second wheel disposed on a common axle, said system being
**characterized in that**
it comprises a suspension tilting module as claimed in one of claims 1 to 18 and two wheels (2, 3) rotatably connected to said module.

20. A system as claimed in claim 19,
**characterized in that**
said system comprises at least two driving motors (4, 5) each mechanically coupled to one of said at least first and second wheels (2, 3), so as to drive said first and second wheels, respectively.

21. A system as claimed in claim 20,
**characterized in that**
said driving motors are received inside the hubs of said wheels.

22. A system as claimed in one of claims claim 20 and 21,
**characterized in that**
said at least two driving motors are electric motors.

23. A system as claimed in one of claims 20 to 22
**characterized in that**
said motors are mechanically coupled to said wheels through corresponding transmission means adapted to act on corresponding driving axles mechanically connected to said wheels.

24. A system as claimed in claim 23,
**characterized in that**
said transmission means comprises transmission belts.

25. A system as claimed in claim 23,
**characterized in that**
said transmission means comprises transmission gearboxes.

26. A wheeled vehicle comprising at least two wheels (2, 3),
**characterized in that**
said vehicle is equipped with a driving tilting suspension system as claimed in one of claims 20 to 25.

27. A vehicle as claimed in claim 26,
**characterized in that**
said vehicle is a four wheeled vehicle comprising two front wheels and two rear wheels, and **in that** said vehicle comprises a rear and a front system as claimed in one of claims 20 to 25, with said rear wheels being rotatably connected to said suspension module of said rear system and the front wheels being rotatably connected to the suspension module of said front system.

28. A vehicle as claimed in claim 26,
**characterized in that**
said vehicle is a four wheeled vehicle comprising two front wheels and two rear wheels, either the front wheels or the rear wheels being driven by a main engine, and **in that** the two wheels not driven by said main engine are rotatably connected to said module of said system.

29. A vehicle as claimed in claim 26,
**characterized in that**
said vehicle is a three wheeled vehicle.

## Patentansprüche

1. Aufhängungs-Neigemodul für ein Radfahrzeug, das wenigstens ein erstes und ein zweites Rad (2, 3) umfasst, die auf einer gemeinsamen Achse angeordnet sind, wobei das Modul eine Aufhängungsstruktur umfasst, die so eingerichtet ist, dass sie das wenigstens erste und zweite Rad trägt und dabei sowohl Neigen als auch vertikale Verschiebung des wenigstens ersten und zweiten Rades zulässt, wobei die Aufhängungsstruktur einen starren Rahmen (17) und Aufhängungsarme (10, 11, 12, 13) umfasst und das Modul eine Neigeeinrichtung (14) umfasst, die schwenkbar mit dem starren Rahmen (17) verbunden ist, so dass Neigen der Neigeeinrichtung bewirkt, dass die Aufhängungsstruktur zusammen mit dem wenigstens ersten und zweiten Rad geneigt wird, wobei
die Neigeeinrichtung mit der Aufhängungsstruktur über eine erste und eine zweite Stoßdämpfeinrichtung verbunden ist, so dass eine vertikale Verschiebung des ersten oder des zweiten Rades (2, 3) oder beider eine Kraft bewirkt, die entgegengesetzt zu der vertikalen Verschiebung auf das erste oder das zweite Rad oder beide ausgeübt wird,
**dadurch gekennzeichnet, dass**
die erste und die zweite Stoßdämpfeinrichtung einen ersten bzw. einen zweiten federnden Stoßdämpfer (18), die so eingerichtet sind, dass sie aufgrund einer vertikalen Verschiebung des ersten bzw. des zweiten Rades federnd betätigt werden, sowie eine erste und eine zweite drehbare Einrichtung (214, 215, 220, 221) umfassen, die schwenkbar mit dem ersten bzw. dem zweiten federnden Stoßdämpfer verbunden und so eingerichtet sind, dass sie aufgrund einer vertikalen Verschiebung des ersten bzw. des zweiten Rades gedreht werden, wobei die Drehung der ersten und der zweiten drehbaren Einrichtung bewirkt, dass eine zusätzliche federnde Betätigung auf den ersten bzw. den zweiten elastischen Stoßdämpfer ausgeübt wird,
wobei die erste und die zweite Stoßdämpfeinrichtung des Weiteren eine erste bzw. eine zweite Verbindungsstange (216, 217, 222, 223) umfassen, die schwenkbar mit der ersten bzw. der zweiten drehbaren Einrichtung verbunden und so eingerichtet sind,
dass sie die erste bzw. die zweite drehbare Einrichtung (214, 215, 220, 221) aufgrund einer vertikalen Verschiebung des ersten bzw. des zweiten Rades drehen und wobei die erste und die zweite Verbindungsstange (216, 217, 220, 221) eine erste und eine zweite Verbindungsstange (216, 217) umfassen, die über entsprechende Schwenkverbindungen (216a, 217a) mit der Aufhängungsstruktur sowie über entsprechende Schwenkverbindungen (214a, 215a) mit der ersten bzw. der zweiten drehbaren Einrichtung (214, 215) jeweils schwenkbar verbunden sind; und **dadurch**, dass sich die Kraft in Abhängigkeit von der vertikalen Verschiebung auf nicht-lineare Weise ändert.

2. Modul nach Anspruch 1,
**dadurch gekennzeichnet, dass**
die Kraft in Abhängigkeit von der vertikalen Verschiebung auf nicht-lineare Weise zunimmt.

3. Modul nach einem der Ansprüche 1 oder 2, **dadurch gekennzeichnet, dass** die erste und die zweite drehbare Einrichtung einen ersten bzw. einen zweiten Schwingarm (214, 215) umfassen, der erste Schwingarm (214) des Weiteren über eine Schwenkverbindung (214b) mit dem ersten federnden Stoßdämpfer (18) sowie über eine Schwenkverbindung (214c) mit der Neigeeinrichtung schwenkbar verbunden ist und der zweite Schwingarm (215) über eine Schwenkverbindung (215b) mit dem zweiten Stoßdämpfer sowie über eine Schwenkverbindung (215c) mit der Neigeeinrichtung (14) schwenkbar verbunden ist.

4. Modul nach Anspruch 3,
**dadurch gekennzeichnet, dass**
der erste und der zweite Schwingarm (214, 215) dreieckig geformt sind, und **dadurch**, dass die Schwenkverbindungen (214a, 214b, 214c, 215a, 215b, 215c) an dem Scheitelpunkt der Schwingarme angeordnet sind.

5. Modul nach einem der Ansprüche 1 bis 4,
**dadurch gekennzeichnet, dass**
die erste und die zweite Verbindungsstange (216, 217, 222, 223) eine erste und eine zweite Verbindungsstange (222, 223) umfassen, die über entsprechende Schwenkverbindungen (222c, 223c) mit den Neigeeinrichtungen sowie über entsprechende Schwenkverbindungen (220b, 221 b) mit der ersten bzw. der zweiten drehbaren Einrichtung (220, 221) jeweils schwenkbar verbunden sind

6. Modul nach Anspruch 5,
**dadurch gekennzeichnet, dass**
die erste und die zweite drehbare Einrichtung einen ersten bzw. einen zweiten Schwingarm (220, 221) umfassen, der erste Schwingarm (220) des Weiteren über eine Schwenkverbindung (18b) mit der Aufhängungsstruktur sowie über eine Schwenkverbindung (220c) mit dem ersten Stoßdämpfer (18) schwenkbar verbunden ist, der zweite Schwingarm (221) über eine Schwenkverbindung (18a) mit der Aufhängungsstruktur sowie über eine Schwenkverbindung (221c) mit dem zweiten Stoßdämpfer (18) schwenkbar verbunden ist

7. Modul nach Anspruch 6,
**dadurch gekennzeichnet, dass**
der erste und der zweite Schwingarm L-förmig sind.

8. Modul nach einem der Ansprüche 1 bis 7,
**dadurch gekennzeichnet, dass**
die Neigeeinrichtung (14) des Weiteren eine Neigekurbel (14), eine erste Neigestange (232), die mit der Neigekurbel schwenkbar verbunden ist, eine zweite Neigestange (230), die sowohl mit der ersten Neigestange (232) als auch dem Aufhängungssystem schwenkbar verbunden ist, und eine dritte Neigestange (231) umfasst, die sowohl mit der ersten Neigestange (232) als auch dem Aufhängungssystem schwenkbar verbunden ist.

9. Modul nach Anspruch 8,
**dadurch gekennzeichnet, dass**
die erste Neigestange (232) über eine Schwenkverbindung (232b) schwenkbar mit der Neigekurbel (14) verbunden ist, **dadurch**, dass die zweite Neigestange (230) über entsprechende Schwenkverbindungen (20) schwenkbar mit der ersten Neigestange (232) bzw. der Aufhängungsstruktur verbunden ist, und **dadurch**, dass die dritte Neigestange (231) über entsprechende Schwenkverbindungen (232c, 231 c) mit der ersten Neigestange (232) und der Aufhängungsstruktur jeweils schwenkbar verbunden ist.

10. Modul nach einem der Ansprüche 1 bis 9,
**dadurch gekennzeichnet, dass**
das Modul des Weiteren einen Betätigungsmechanismus umfasst, der mit der Neigeeinrichtung mechanisch so verbunden ist, dass Betätigung der Betätigungsvorrichtung bewirkt, dass die Neigeeinrichtung einen Neigeimpuls erhält.

11. Modul nach Anspruch 10,
**dadurch gekennzeichnet, dass**
die Betätigungsvorrichtung eine drehbare Welle (15b) umfasst, die fest an der Neigeeinrichtung (14) angebracht ist.

12. Modul nach Anspruch 11,
**dadurch gekennzeichnet, dass**
die Betätigungsvorrichtung wenigstens einen Elektromotor (16) umfasst, der mechanisch mit der drehbaren Welle gekoppelt und so eingerichtet ist, dass er die drehbare Welle dreht.

13. Modul nach Anspruch 12,
**dadurch gekennzeichnet, dass**
der wenigstens eine Elektromotor (16) über ein Untersetzungsgetriebe (15) mechanisch mit der drehbaren Welle (15b) gekoppelt ist.

14. Modul nach Anspruch 11,
**dadurch gekennzeichnet, dass**
die Betätigungsvorrichtung ein hydraulisches System umfasst, das mechanisch mit der drehbaren Welle (15b) gekoppelt und so eingerichtet ist, dass es die drehbare Welle (15b) dreht.

15. Modul nach einem der Ansprüche 10 und 11,
**dadurch gekennzeichnet, dass**
die Betätigungsvorrichtung so eingerichtet ist, dass sie manuell so betätigt wird, und dass manuelle Betätigung der Betätigungsvorrichtung bewirkt, dass die Neigeeinrichtung (14) einen Neigeimpuls erhält.

16. Modul nach einem der Ansprüche 10 bis 15,
**dadurch gekennzeichnet, dass**
die Aufhängungsstruktur einen starren Rahmen (17) umfasst, der so eingerichtet ist, dass er fest an dem Chassis des Fahrzeugs angebracht ist, wobei der starre Rahmen fest an der Betätigungsvorrichtung angebracht und schwenkbar mit Aufhängungsarmen (10, 11, 12, 13) der Aufhängungsstruktur verbunden ist, so dass Betätigung der Betätigungsvorrichtung bewirkt, dass der starre Rahmen zusammen mit den wenigstens zwei Rädern geneigt wird.

17. Modul nach Anspruch 16,
**dadurch gekennzeichnet, dass**
die Aufhängungsarme einen ersten oberen Arm (12) und einen ersten unteren Arm (13), die so eingerichtet sind, dass sie zusammen eine erste Stütze (9) so tragen, dass Neigen der ersten Stütze (9) möglich ist, sowie einen zweiten oberen Arm (10) und einen zweiten unteren Arm (11) umfassen, die so eingerichtet sind, dass sie zusammen eine zweite Stütze (8) so tragen, dass Neigen der zweiten Stütze (8) möglich ist, wobei die erste und die zweite Stütze so eingerichtet sind, dass sie das erste und das zweite Rad (2, 3) jeweils so drehbar tragen, dass beim Neigen des Neigemoduls das erste und das zweite Rad zusammen mit der ersten und der zweiten Stütze geneigt werden.

18. Modul nach Anspruch 17,
**dadurch gekennzeichnet, dass**
die erste und die zweite Stütze (9, 8) so eingerichtet sind, dass sie Lenken des ersten und des zweiten Rades an entsprechenden Lenkachsen im Wesentlichen vertikal ermöglichen.

19. Antreibendes Neige-Aufnehmungssystem für ein Radfahrzeug, das wenigstens ein erstes und ein zweites Rad umfasst, die auf einer gemeinsamen Achse angeordnet sind, wobei das System **dadurch gekennzeichnet ist, dass** es ein Aufhängungs-Neigemodul nach einem der Ansprüche 1 bis 18 und zwei Räder (2, 3) umfasst, die drehbar mit dem Modul verbunden sind.

20. System nach Anspruch 19,
**dadurch gekennzeichnet, dass**
das System wenigstens zwei Antriebsmotoren (4, 5) umfasst, die jeweils mechanisch mit einem von dem wenigstens ersten und zweiten Rad (2, 3) gekoppelt sind, um das erste bzw. das zweite Rad anzutreiben.

21. System nach Anspruch 20,
**dadurch gekennzeichnet, dass**
die Antriebsmotoren im Inneren der Naben der Räder aufgenommen sind.

22. System nach einem der Ansprüche 20 und 21,
**dadurch gekennzeichnet, dass**
die wenigstens zwei Antriebsmotoren Elektromotoren sind.

23. System nach einem der Ansprüche 20 bis 22,
**dadurch gekennzeichnet, dass**
die Motoren über entsprechende Übertragungseinrichtungen, die so eingerichtet sind, dass sie auf entsprechende Antriebsachsen wirken, die mechanisch mit den Rädern verbunden sind, mechanisch mit den Rädern gekoppelt sind.

24. System nach Anspruch 23,
**dadurch gekennzeichnet, dass**
die Übertragungseinrichtungen Übertragungsriemen umfassen.

25. System nach Anspruch 23,
**dadurch gekennzeichnet, dass**
die Übertragungseinrichtungen Übertragungsgetriebe umfassen.

26. Radfahrzeug, das wenigstens zwei Räder (2, 3) umfasst,
**dadurch gekennzeichnet, dass**
das Fahrzeug mit einem antreibenden Neige-Aufhängungssystem nach einem der Ansprüche 20 bis 25 versehen ist.

27. Fahrzeug nach Anspruch 26,
**dadurch gekennzeichnet, dass**
das Fahrzeug ein vierrädriges Fahrzeug ist, das zwei Vorderräder und zwei Hinterräder umfasst, und **dadurch**, dass das Fahrzeug ein hinteres sowie ein vorderes System nach einem der Ansprüche 20 bis 25 umfasst, wobei die Hinterräder drehbar mit dem Aufhängungsmodul des hinteren Systems verbunden sind und die Vorderräder drehbar mit dem Aufhängungsmodul des vorderen Systems verbunden sind.

28. Fahrzeug nach Anspruch 26,
**dadurch gekennzeichnet, dass**
das Fahrzeug ein vierrädriges Fahrzeug ist, das zwei Vorderräder und zwei Hinterräder umfasst, wobei entweder die Vorderräder oder die Hinterräder von einem Hauptmotor angetrieben werden, und **dadurch**, dass die zwei Räder, die nicht von dem Hauptmotor angetrieben werden, drehbar mit dem Modul des Systems verbunden sind.

29. Fahrzeug nach Anspruch 26,
**dadurch gekennzeichnet, dass**
das Fahrzeug ein dreirädriges Fahrzeug ist.

## Revendications

1. Module d'inclinaison de suspension pour un véhicule à roues comprenant au moins une première et une deuxième roue (2, 3) disposées sur un axe commun, ledit module comprenant une structure de suspension conçue pour supporter lesdites première et deuxième roues permettant tant l'inclinaison que le déplacement vertical desdites première et deuxième roues, ladite structure de suspension comprenant un cadre rigide (17) et des bras de suspension (10, 11, 12, 13), ledit module comprenant un moyen d'inclinaison (14) relié de manière pivotante audit cadre rigide (17), de sorte que l'inclinaison dudit moyen d'inclinaison aboutit à l'inclinaison de ladite structure de suspension en même temps que lesdites première et deuxième roues, dans lequel
ledit moyen d'inclinaison est relié à ladite structure de suspension par l'intermédiaire de premier et second moyens amortisseurs, de sorte qu'un déplacement vertical d'une ou des deux desdites première ou deuxième roues (2, 3) aboutit à l'exercice d'une force respectivement sur une ou les deux desdites première et deuxième roues, en sens contraire dudit déplacement vertical,
**caractérisé en ce que**
lesdits premier et le second moyens amortisseurs comprennent respectivement des premier et second amortisseurs élastiques (18), conçus pour être stimulés de façon élastique suite à un déplacement vertical respectivement desdites première et deuxième roues, de même que des premier et second moyens rotatifs (214, 215, 220, 221) reliés de manière pivotante respectivement auxdits premier et second amortisseurs élastiques, et conçus pour être pivotés suite à un
déplacement vertical respectivement desdites première et deuxième roues, la rotation desdits premier et second moyens rotatifs aboutissant à une stimulation élastique supplémentaire exercée respectivement sur lesdits premier et second amortisseurs élastiques,
dans lequel lesdits premier et second moyens amortisseurs comprennent en outre respectivement des première et deuxième tiges de connexion (216, 217, 222, 223), reliées de manière pivotante respectivement auxdits premier et second moyens rotatifs, et conçues pour faire tourner respectivement lesdits premier et second moyens rotatifs (214, 215, 220, 221), suite à un déplacement vertical respectivement desdites première et deuxième roues,
et dans lequel lesdites première et deuxième tiges de connexion (216, 217, 220, 221) comprennent des première et deuxième tiges de connexion (216, 217) reliées de manière pivotante à ladite structure de suspension respectivement par l'intermédiaire de connexions pivotantes correspondantes (216a, 217a), aussi bien respectivement qu'auxdits premier et second moyens rotatifs (214, 215), respectivement par l'intermédiaire de connexions pivotantes correspondantes (214a, 215a) ; et **en ce que**
ladite force varie d'une façon non linéaire en fonction dudit déplacement vertical.

2. Module selon la revendication 1,
**caractérisé en ce que**
ladite force augmente d'une façon non linéaire en fonction dudit déplacement vertical.

3. Module selon l'une des revendications 1 ou 2, **caractérisé en ce que**
lesdits premier et second moyens rotatifs comprennent respectivement des premier et second bras basculeurs (214, 215), ledit premier bras basculeur (214) étant en outre relié de manière pivotante audit premier amortisseur élastique (18) par l'intermédiaire d'une connexion pivotante (214b) de même qu'audit moyen d'inclinaison (14) par l'intermédiaire d'une connexion pivotante (214c), ledit second bras basculeur (215) étant relié de manière pivotante audit second amortisseur par l'intermédiaire d'une connexion pivotante (215b), de même qu'audit moyen d'inclinaison (14) par l'intermédiaire d'une connexion pivotante (215c).

4. Module selon la revendication 3,
**caractérisé en ce que**
lesdits premier et second bras basculeurs (214, 215) sont en forme de triangle et **en ce que** lesdites connexions pivotantes (214a, 214b, 214c, 215a, 215b, 215c) sont disposées au sommet desdits bras basculeurs.

5. Module selon l'une des revendications 1 à 4, **caractérisé en ce que**
lesdites première et deuxième tiges de connexion (216, 217, 222, 223) comprennent des première et deuxième tiges de connexion (222, 223) reliées de manière pivotante audit moyen d'inclinaison respectivement par l'intermédiaire de connexions pivotantes correspondantes (222c, 223c), de même respectivement qu'auxdits premier et second moyens rotatifs (220, 221), par l'intermédiaire de connexions pivotantes correspondantes (220b, 221 b).

6. Module selon la revendication 5,
**caractérisé en ce que**
lesdits premier et second moyens rotatifs comprennent respectivement des premier et second bras basculeurs (220, 221), ledit premier bras basculeur (220) étant en outre relié de manière pivotante à ladite structure de suspension par l'intermédiaire d'une connexion pivotante (18b) de même qu'audit
premier amortisseur (18) par l'intermédiaire d'une connexion pivotante (220c), ledit second bras basculeur (221) étant relié de manière pivotante à ladite structure de suspension par l'intermédiaire d'une connexion pivotante (18a), de même qu'audit second amortisseur (18) par l'intermédiaire d'une connexion pivotante (221c).

7. Module selon la revendication 6,
**caractérisé en ce que**
lesdits premier et second bras basculeurs sont en forme de L.

8. Module selon l'une des revendications 1 à 7,
**caractérisé en ce que**
ledit moyen d'inclinaison (14) comprend en outre une manivelle d'inclinaison (14), une première tige d'inclinaison (232) reliée de manière pivotante à ladite manivelle d'inclinaison, une deuxième tige d'inclinaison (230) reliée de manière pivotante tant à ladite première tige d'inclinaison (232) qu'audit système de suspension, et une troisième tige d'inclinaison (231) reliée de manière pivotante tant à ladite première tige d'inclinaison (232) qu'audit système de suspension.

9. Module selon la revendication 8,
**caractérisé en ce que**
ladite première tige d'inclinaison (232) est reliée de manière pivotante à ladite manivelle d'inclinaison (14) par l'intermédiaire d'une connexion pivotante (232b), **en ce que** ladite seconde tige d'inclinaison (230) est reliée de manière pivotante à ladite première tige d'inclinaison (232) et à ladite structure de suspension respectivement par l'intermédiaire de connexions pivotantes correspondantes (232a, 230a), et **en ce que** ladite troisième tige d'inclinaison (231) est reliée de
manière pivotante à ladite première tige d'inclinaison (232) et à ladite structure de suspension respectivement par l'intermédiaire de connexions pivotantes correspondantes (232c, 231a).

10. Module selon l'une des revendications 1 à 9,
**caractérisé en ce que**
ledit module comprend en outre un dispositif d'actionnement mécaniquement relié audit moyen d'inclinaison, de sorte que l'activation dudit dispositif d'actionnement aboutit à une impulsion d'inclinaison donnée audit moyen d'inclinaison.

11. Module selon la revendication 10,
**caractérisé en ce que**
ledit dispositif d'actionnement comprend un arbre rotatif (15b) fermement fixé audit moyen d'inclinaison (14).

12. Module selon la revendication 11,
**caractérisé en ce que**
ledit dispositif d'actionnement comprend au moins un moteur électrique (16) mécaniquement relié audit arbre rotatif et conçu pour faire tourner ledit arbre rotatif.

13. Module selon la revendication 12,
**caractérisé en ce que**
ledit au moins un moteur électrique (16) est mécaniquement relié audit arbre rotatif (15b) par l'intermédiaire d'un engrenage de réduction (15).

14. Module selon la revendication 11,
**caractérisé en ce que**
ledit dispositif d'actionnement comprend un système hydraulique mécaniquement relié audit arbre rotatif (15b) et conçu pour faire tourner ledit arbre rotatif (15b).

15. Module selon l'une des revendications 10 et 11,
**caractérisé en ce que**
ledit dispositif d'actionnement est conçu pour être activé manuellement, de sorte qu'une activation manuelle dudit dispositif d'actionnement aboutit à une impulsion d'inclinaison donnée audit moyen d'inclinaison (14).

16. Module selon l'une des revendications 10 à 15,
**caractérisé en ce que**
ladite structure de suspension comprend un cadre rigide (17) conçu pour être fermement fixé au châssis dudit véhicule, ledit cadre rigide étant fermement fixé audit dispositif d'actionnement et relié de manière pivotante aux bras de suspension (10, 11, 12, 13) de ladite structure de suspension de sorte que l'activation dudit dispositif d'actionnement aboutit à l'inclinaison dudit cadre rigide en même temps que lesdites au moins deux roues.

17. Module selon la revendication 16,
**caractérisé en ce que**
lesdits bras de suspension comprennent un premier bras supérieur (12) et un premier bras inférieur (13) conçus pour supporter de manière pivotante, en combinaison, un premier montant (9), de façon à permettre l'inclinaison dudit premier montant (9), de même qu'un second bras supérieur (10) et qu'un second bras inférieur (11) conçus pour supporter de manière pivotante, en combinaison, un second montant (8), de façon à permettre l'inclinaison dudit second montant (8), lesdits premier et second montants étant conçus pour respectivement supporter en rotation lesdites première et deuxième roues (2, 3), de sorte que, pendant l'inclinaison dudit module d'inclinaison,
lesdites première et deuxième roues sont inclinées en même temps que lesdits premier et second montants.

18. Module selon la revendication 17,
**caractérisé en ce que**
lesdits premier et second montants (9, 8) sont conçus pour permettre de diriger lesdites première et deuxième roues sur des axes de direction correspondants sensiblement verticaux.

19. Système de suspension à inclinaison d'entraînement pour un véhicule à roues comprenant au moins une première et une deuxième roue disposées sur un axe commun, ledit système étant
**caractérisé en ce que**
il comprend un module d'inclinaison de suspension selon l'une quelconque des revendications 1 à 18 et deux roues (2, 3) reliées en rotation audit module.

20. Système selon la revendication 19,
**caractérisé en ce que**
ledit système comprend au moins deux moteurs d'entraînement (4, 5) chacun étant mécaniquement relié à l'une desdites première et deuxième roues (2, 3), de façon à entraîner respectivement lesdites première et deuxième roues.

21. Système selon la revendication 20,
**caractérisé en ce que**
lesdits moteurs d'entraînement sont reçus à l'intérieur des moyeux desdites roues.

22. Système selon l'une des revendications 20 et 21,
**caractérisé en ce que**
lesdits au moins deux moteurs d'entraînement sont des moteurs électriques.

23. Système selon l'une des revendications 20 à 22,
**caractérisé en ce que**
lesdits moteurs sont mécaniquement reliés auxdites roues par l'intermédiaire d'un moyen de transmission correspondant conçu pour agir sur des axes d'entraînement correspondants mécaniquement reliés auxdites roues.

24. Système selon la revendication 23,
**caractérisé en ce que**
ledit moyen de transmission comprend des courroies de transmission.

25. Système selon la revendication 23,
**caractérisé en ce que**
ledit moyen de transmission comprend des boîtes de vitesse de transmission.

26. Véhicule à roues comprenant au moins deux roues (2, 3),
**caractérisé en ce que**
ledit véhicule est équipé d'un système de suspension à inclinaison d'entraînement selon l'une quelconque des revendications 20 à 25.

27. Véhicule selon la revendication 26,
**caractérisé en ce que**
ledit véhicule est un véhicule à quatre roues comprenant deux roues avant et deux roues arrière, et **en ce que** ledit véhicule comprend un système arrière et un système avant selon l'une quelconque des revendications 20 à 25, lesdites roues arrière étant reliées en rotation audit module de suspension dudit système arrière et les roues avant étant reliées en rotation audit module de suspension dudit système avant.

28. Véhicule selon la revendication 26,
**caractérisé en ce que**
ledit véhicule est un véhicule à quatre roues comprenant deux roues avant et deux roues arrière, soit les roues avant soit les roues arrière étant entraînées par un moteur principal, et **en ce que** les deux roues non entraînées par ledit moteur principal sont reliées en rotation audit module dudit système.

29. Véhicule selon la revendication 26,
**caractérisé en ce que**
ledit véhicule est un véhicule à trois roues.
